# EUROPEAN PATENT SPECIFICATION

(11) **EP 3 958 540 B1**
(45) Date of publication and mention of the grant of the patent: **14.05.2025**
(21) Application number: 21189604.8
(22) Date of filing: 04.08.2021
(51) Int. Cl.: H04L 67/1001, H04L 67/51

(54) **METHOD, APPARATUS, AND COMPUTER PROGRAM PRODUCT FOR ENHANCED DATA ANALYTICS IN MULTIPLE NWDAF DEPLOYMENTS**
VERFAHREN, VORRICHTUNG UND COMPUTERPROGRAMMPRODUKT ZUR VERBESSERTEN DATENANALYSE IN MEHREREN NWDAF-ANWENDUNGEN
PROCÉDÉ, APPAREIL ET PRODUIT DE PROGRAMME INFORMATIQUE POUR ANALYSE DE DONNÉES AMÉLIORÉE DANS DES DÉPLOIEMENTS NWDAF MULTIPLES

(30) Priority: 12.08.2020 US 202063064852 P
(43) Date of publication of application: 23.02.2022
(73) Proprietor: Nokia Technologies Oy, 02610 Espoo (FI)
(72) Inventor: SINGH, Shubhranshu, Seeheim-Jugenheim (DE); LAIR, Yannick, Voisins le Bretonneux (FR); KUNZMANN, Gerald, Munich (DE)
(74) Representative: Script Intellectual Property LLP

(56) References cited:
- NOKIA ET AL: "KI #2, New Solution: Distributed NWDAFs deployment and Aggregation Function", vol. SA WG2, no. Elbonia; 20200819 - 20200902, 2 September 2020 (2020-09-02), XP051928783, Retrieved from the Internet <URL:https://ftp.3gpp.org/tsg_sa/WG2_Arch/TSGS2_140e_Electronic/Docs/S2-2006249.zip> [retrieved on 20200902]
- "3rd Generation Partnership Project; Technical Specification Group Services and System Aspects; Study on enablers for network automation for the 5G System (5GS); Phase 2 (Release 17)", no. V0.4.0, 1 July 2020 (2020-07-01), pages 1 - 186, XP051925862, Retrieved from the Internet <URL:ftp://ftp.3gpp.org/Specs/archive/23_series/23.700-91/23700-91-040.zip> [retrieved on 20200701]

## Description

### TECHNOLOGICAL FIELD

An example embodiment relates generally to enhanced data analytics in multiple network data analytics function (NWDAF) deployments in a communication network, such as a 3^{rd} generation partnership project (3GPP) 5^{th} generation (5G) communication network.

### BACKGROUND

A communication system can be seen as a facility that enables communication sessions between two or more entities such as user equipment, base stations/access points, Network Functions (NF), and/or other nodes by providing connectivity between the various entities involved in the communication path. A communication system can be provided, for example, with a communication network and one or more compatible communication devices. Telecommunication networks continue to evolve and the 5^{th} generation of mobile networks (5G networks) is now expected to be the next major phase of mobile telecommunication standards and to bring many improvements in the mobile network user experience. For instance, 5G networks should provide new technical solutions allowing a greater throughput, lower latency, higher reliability, higher connectivity, and higher mobility range. In addition to these improvements in terms of performance, 5G networks are also expected to extend the flexibility in the network usage and to provide users with a wider range of use cases and business models.

The 3^{rd} Generation Partnership Project (3GPP) is a standards organization which develops protocols for mobile telephony and is known for the development and maintenance of various standards including 2^{nd} generation (2G), 3^{rd} generation (3G), 4^{th} generation (4G), Long Term Evolution (LTE), and 5^{th} generation (5G) standards. The 5G network has been designed as a Service Based Architecture (SBA), e.g., a system architecture in which the system functionality is achieved by a set of NFs providing services to other authorized NFs to access their services. The 5G network allows for the support of emergency services fallback registration between a User Equipment (UE) and an Access and Mobility Management Function (AMF).

As part of 3GPP Release-15 and Release-16, architecture enhancements for a 5G system (5GS) has been proposed to support network data analytics services, for example specified in 3GPP TS 23.288 version 16.4.0. However, when multiple network data analytics functions (NWDAFs) are deployed, e.g., in a public land mobile network (PLMN), the retrieval of analytics data for data consumers can often be inefficient and often results in data consumers not receiving data for some analytics identifications or areas of interest, among other deficiencies.

As part of 3GPP Release-17, a study of enablers for network automation for the 5G System (5GS) is described in 3GPP TR 23.700-91 version 0.4.0. Therein, a solution, denoted as Solution #14 is proposed to support flexible Analytics data aggregation for multiple NWDAFs, which encompasses both distributed and centralized analytics data aggregation models.

### BRIEF SUMMARY

According to the present invention, there are provided methods, apparatuses, and a computer program product, as defined by the appended claims.

### BRIEF DESCRIPTION OF THE DRAWINGS

Having thus described embodiments of the disclosure in general terms, reference will now be made to the accompanying drawings, which are not necessarily drawn to scale, and wherein:
FIG. 1 illustrates an example architecture for a communications network, according to some embodiments;
FIG. 2 illustrates an example architecture for a communications network, according to some embodiments;
FIG. 3 illustrates an example architecture for a communications network, according to some embodiments;
FIG. 4 illustrates an example computing device for communicating over communication networks with other network entities, according to some embodiments;
FIG. 5 illustrates an example system for distributed NWDAF deployment with a central NWDAF, according to some embodiments;
FIG. 6 illustrates an example communication process for registration of an NWDAF and/or NWDAF-C with a Network Repository Function (NRF), according to some embodiments;
FIG. 7 illustrates an example communication process for registration of an NWDAF with an NRF, according to some embodiments;
FIG. 8 illustrates an example communication process for network consumer functions discovering an NWDAF with an NRF, according to some embodiments;
FIG. 9 illustrates an example communication process for data consumer and/or analytics consumer to request or subscribe to an analytics identification in support of network data analytics, according to some embodiments;
FIG. 10 is a flow chart illustrating the operations performed, such as by a communication device or other network function consumer, according to some embodiments;
FIG. 11 is a flow chart illustrating the operations performed, such as by a network device, such as an NRF, according to some embodiments;
FIG. 12 illustrates an example system for distributed NWDAF deployment with a central NWDAF, according to some embodiments;
FIG. 13 illustrates an example communication process for registration of an NWDAF with an NRF, according to some embodiments;
FIG. 14 illustrates an example communication process for network consumer functions discovering an NWDAF with an NRF, according to some embodiments; and
FIG. 15 illustrates an example communication process for data consumer and/or analytics consumer to request or subscribe to an analytics identification in support of network data analytics, according to some embodiments.

### DETAILED DESCRIPTION

Some embodiments (which generally refer to embodiments of the present disclosure, without specifying and/or limiting the present invention as claimed) will now be described more fully hereinafter with reference to the accompanying drawings, in which some, but not all, embodiments are shown. Indeed, various embodiments can be embodied in many different forms and should not be construed as limited to the embodiments set forth herein; rather, these embodiments are provided so that this disclosure will satisfy applicable legal requirements. The term "or" is used herein in both the alternative and conjunctive sense, unless otherwise indicated. The terms "illustrative" and "exemplary" are used to be examples with no indication of quality level. Like reference numerals refer to like elements throughout. As used herein, the terms "data," "content," "information," and similar terms can be used interchangeably to refer to data capable of being transmitted, received and/or stored in accordance with embodiments. Thus, use of any such terms should not be taken to limit the scope of the disclosed embodiments.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

Additionally, as used herein, the terms "node," "entity," "intermediary," "intermediate entity," "go-between," and similar terms can be used interchangeably to refer to computers connected via, or programs running on, a network or plurality of networks capable of data creation, modification, deletion, transmission, receipt, and/or storage in accordance with embodiments. Thus, use of any such terms should not be taken to limit the scope of the disclosed embodiments.

Additionally, as used herein, the terms "user equipment," "user device," "device," "apparatus," "mobile device," "personal computer," "laptop computer," "laptop," "desktop computer," "desktop," "mobile phone," "tablet," "smartphone," "smart device," "cellphone," "communication device," "user communication device," "terminal," and similar terms can be used interchangeably to refer to computers configured to access a network or plurality of networks for at least the purpose of wired or wireless transmission of communication signals in accordance with example embodiments. Thus, use of any such terms should not be taken to limit the scope of the disclosed embodiments.

As defined herein, a "computer-readable storage medium," which refers to a non-transitory physical storage medium (e.g., volatile or non-volatile memory device), can be differentiated from a "computer-readable transmission medium," which refers to an electromagnetic signal. Such a medium can take many forms, including, but not limited to a non-transitory computer-readable storage medium (e.g., non-volatile media, volatile media), and transmission media. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Examples of non-transitory computer-readable media include a magnetic computer readable medium (e.g., a floppy disk, hard disk, magnetic tape, any other magnetic medium), an optical computer readable medium (e.g., a compact disc read only memory (CD-ROM), a digital versatile disc (DVD), a Blu-Ray disc, or the like), a random access memory (RAM), a programmable read only memory (PROM), an erasable programmable read only memory (EPROM), a FLASH-EPROM, or any other non-transitory medium from which a computer can read. The term computer-readable storage medium is used herein to refer to any computer-readable medium except transmission media. However, it will be appreciated that where embodiments are described to use a computer-readable storage medium, other types of computer-readable mediums can be substituted for or used in addition to the computer-readable storage medium in alternative embodiments.

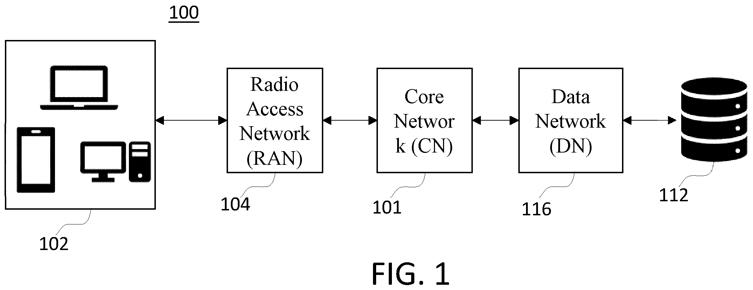

In the following, certain embodiments are explained with reference to communication devices capable of communication via a wired and/or wireless network and communication systems serving such communication devices. Before explaining in detail the exemplifying embodiments, certain general principles of a wired and/or wireless communication system, access systems thereof, and communication devices are briefly explained with reference to FIGS. 1-3 to assist in understanding the technology underlying the described examples.

According to some embodiments, a communication device or terminal can be provided for wireless access via cells, base stations, access points or the like (e.g., wireless transmitter and/or receiver nodes providing access points for a radio access communication system and/or other forms of wired and/or wireless networks). Such wired and/or wireless networks include, but are not limited to, networks configured to conform to 2G, 3G, 4G, LTE, 5G, and any other similar or yet to be developed future communication network standards. The present disclosure contemplates that any methods, apparatuses, computer program codes, and any portions or combination thereof can also be implemented with yet undeveloped communication networks and associated standards as would be developed in the future and understood by one skilled in the art in light of the present disclosure.

Access points and hence communications there through are typically controlled by at least one appropriate control apparatus so as to enable operation thereof and management of mobile communication devices in communication therewith. In some embodiments, a control apparatus for a node can be integrated with, coupled to, and/or otherwise provided for controlling the access points. In some embodiments, the control apparatus can be arranged to allow communications between a user equipment and a core network or a network entity of the core network. For this purpose, the control apparatus can comprise at least one memory, at least one data processing unit such as a processor or the like, and an input/output interface. Via the interface, the control apparatus can be coupled to relevant other components of the access point. The control apparatus can be configured to execute an appropriate software code to provide the control functions. It shall be appreciated that similar components can be provided in a control apparatus provided elsewhere in the network system, for example in a core network entity. The control apparatus can be interconnected with other control entities. The control apparatus and functions can be distributed between several control units. In some embodiments, each base station can comprise a control apparatus. In alternative embodiments, two or more base stations can share a control apparatus.

Access points and associated controllers can communicate with each other via a fixed line connection and/or via a radio interface. The logical connection between the base station nodes can be provided for example by an X2, an S1, and/or the like interface. This interface can be used for example for coordination of operation of the stations and performing reselection or handover operations. The logical communication connection between the initial communication node and the final communication node on the network can comprise a plurality of intermediary nodes. Additionally, any of the nodes can be added to and removed from the logical communication connection as required to establish and maintain a network function communication.

The communication device or user equipment can comprise any suitable device capable of at least receiving a communication signal comprising data. The communication signal can be transmitted via a wired connection, a wireless connection, or some combination thereof. For example, the device can be a handheld data processing device equipped with a radio receiver, a data processor and a user interface. Non-limiting examples include a mobile station (MS) such as a mobile phone or what is known as a 'smart phone', a portable computer such as a laptop or a tablet computer provided with a wireless interface card or other wireless interface facility, personal data assistant (PDA) provided with wireless communication capabilities, or any combinations of these or the like. Further examples include wearable wireless devices such as those integrated with watches or smart watches, eyewear, helmets, hats, clothing, earpieces with wireless connectivity, jewelry and so on, universal serial bus (USB) sticks with wireless capabilities, modem data cards, machine type devices or any combinations of these or the like.

In some embodiments, a communication device, e.g., configured for communication with the wireless network or a core network entity, can be exemplified by a handheld or otherwise mobile communication device (or user equipment UE). A mobile communication device can be provided with wireless communication capabilities and appropriate electronic control apparatus for enabling operation thereof. Thus, the communication device can be provided with at least one data processing entity, for example a central processing unit and/or a core processor, at least one memory and other possible components such as additional processors and memories for use in software and hardware aided execution of tasks it is designed to perform. The data processing, storage and other relevant control apparatus can be provided on an appropriate circuit board and/or in chipsets. Data processing and memory functions provided by the control apparatus of the communication device are configured to cause control and signaling operations in accordance with certain embodiments as described later in this description. A user can control the operation of the communication device by a suitable user interface such as a touch sensitive display screen or pad and/or a keypad, one of more actuator buttons, voice commands, combinations of these, or the like. A speaker and a microphone are also typically provided. Furthermore, a mobile communication device can comprise appropriate connectors (either wired or wireless) to other devices and/or for connecting external accessories, for example hands-free equipment, thereto.

In some embodiments, a communication device can communicate wirelessly via an appropriate apparatus for receiving and transmitting signals. In some embodiments, a radio unit can be connected to the control apparatus of the device. The radio unit can comprise a radio part and associated antenna arrangement. The antenna arrangement can be arranged internally or externally to the communication device.

FIGS. 1-3 illustrate various example architectures for a communications network 100 in which the various methods, apparatuses, and computer program products can be carried out and/or used. In some embodiments, the communications network 100 can comprise any suitable configuration, number, orientation, positioning, and/or dimensions of components and specialized equipment configured to provide an air interface (e.g., New Radio (NR)) for communication or connection between a User Equipment 102 (UE 102) and a Data Network 116 (DN 116) via a Core Network 101 (CN 101) of the communications network 100. The UE 102 can be associated with one or more devices associated with one or more NF service consumers. As illustrated in FIG. 1, a communications network 100 can be provided in which the UE 102 is in operable communication with the Radio Access Network 104 (RAN 104), such as by way of a transmission tower, a base station, an access point, a network node, and/or the like. In some embodiments, the RAN 104 can communicate with the CN 101 or a component or entity thereof. In some embodiments, the CN 101 can facilitate communication between the UE 102 and the DN 116, such as for sending data, messages, requests, and/or the like. In some embodiments, the DN 116 or the CN 101 can be in communication with an Application Server (AS) or Application Function (AF) 112 (AS 112 or AF 112). The RAN 104, CN 101, DN 116, and/or AS/AF 112 can be associated with a Network Repository Function (NRF), Network Function (NF) service producer, Secure Copy Protocol (SCP), Security Edge Protection Proxy (SEPP), Policy Charging Function (PCF), the like, or any combination thereof.

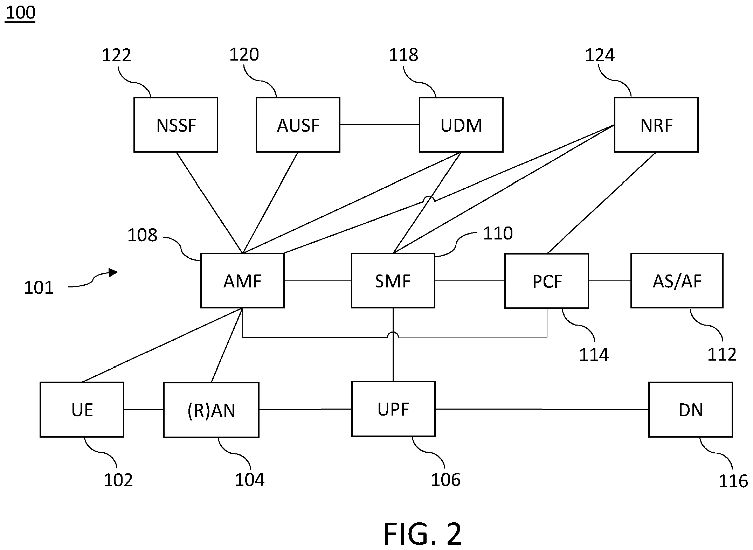

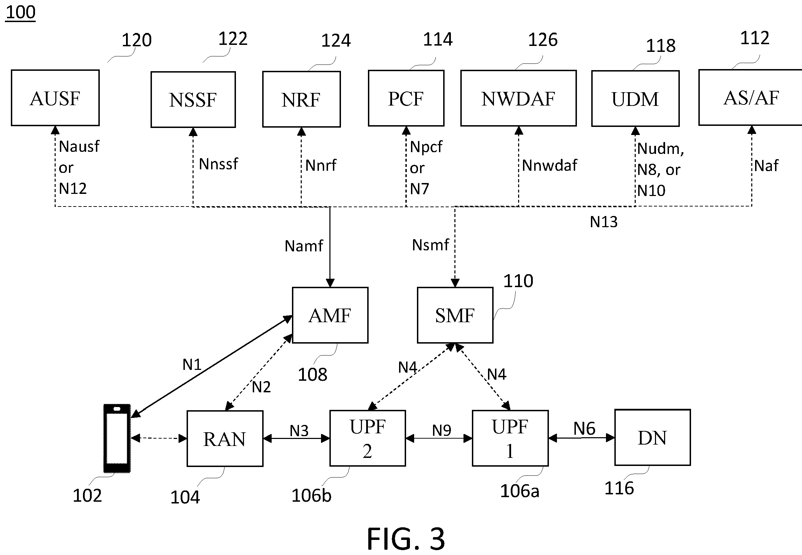

In the context of a 5G network, such as illustrated in FIGS. 2 and 3, the communications network 100 can comprise a series of connected network devices and specialized hardware that is distributed throughout a service region, state, province, city, or country, and one or more network entities, which can be stored at and/or hosted by one or more of the connected network devices or specialized hardware. In some embodiments, the UE 102 can connect to the RAN 104, which can then relay the communications between the UE 102 and the CN 101, the CN 101 being connected to the DN 116, which can be in communication with one or more AS/AF 112. In some embodiments, the UE 102 can be in communication with a RAN 104, which can act as a relay between the UE 102 and other components or services of the CN 101. For instance, in some embodiments, the UE 102 can communicate with the RAN 104, which can in turn communicate with an Access and Mobility Management Function 108 (AMF 108). In other instance or embodiments, the UE 102 can communicate directly with the AMF 108. In some embodiments, the AMF 108 can be in communication with one or more network functions (NFs), such as an Authentication Server Function 120 (AUSF 120), a Network Slice Selection Function 122 (NSSF 122), a Network Repository Function 124 (NRF 124), a Policy Charging Function 114 (PCF 114), a Network Data Analytics Function 126 (NWDAF 126), a Unified Data Management function 118 (UDM 118), the AS/AF 112, a Session Management Function 110 (SMF 110), and/or the like.

In some embodiments, the SMF 110 can be in communication with one or more User Plane Functions 106 (UPF 106, UPF 106a, UPF 106b, collectively "UPF 106"). By way of example only, in some embodiments, the UPF 106 can be in communication with the RAN 104 and the DN 116. In other embodiments, the DN 116 can be in communication with a first UPF 106a and the RAN 104 can be in communication with a second UPF 106b, while the SMF 110 is in communication with both the first and second UPFs 106a, b and the first and second UPFs 106a, b are in communication each with the other.

In some embodiments, the UE 102 can comprise a single-mode or a dual-mode device such that the UE 102 can be connected to one or more RANs 104. In some embodiments, the RAN 104 can be configured to implement one or more Radio Access Technologies (RATs), such as Bluetooth, Wi-Fi, and Global System for Mobile Communications (GSM), Universal Mobile Telecommunications Service (UMTS), LTE or 5G NR, among others, that can be used to connect the UE 102 to the CN 101. In some embodiments, the RAN 104 can comprise or be implemented using a chip, such as a silicon chip, in the UE 102 that can be paired with or otherwise recognized by a similar chip in the CN 101, such that the RAN 104 can establish a connection or line of communication between the UE 102 and the CN 101 by identifying and pairing the chip within the UE 102 with the chip within the CN 101. In some embodiments, the RAN 104 can implement one or more base stations, towers or the like to communicate between the UE 102 and the AMF 108 of the CN 101.

In some embodiments, the communications network 100 or components thereof (e.g., base stations, towers, etc.) can be configured to communicate with a communication device (e.g., the UE 102) such as a cell phone or the like over multiple different frequency bands, e.g., FR1 (below 6 GHz), FR2 (mm Wave), other suitable frequency bands, sub-bands thereof, and/or the like. In some embodiments, the communications network 100 can comprise or employ massive Multiple Input and Multiple Output (massive MIMO) antennas. In some embodiments, the communications network 100 can comprise multi-user MIMO (MU-MIMO) antennas. In some embodiments, the communications network 100 can employ edge computing whereby the computing servers are communicatively, physically, computationally, and/or temporally closer to the communications device (e.g., UE 102) in order to reduce latency and data traffic congestion. In some embodiments, the communications network 100 can employ other technologies, devices, or techniques, such as small cell, low-powered RAN, beamforming of radio waves, WIFI-cellular convergence, Non-Orthogonal Multiple Access (NOMA), channel coding, and the like.

As illustrated in FIG. 3, the UE 102 can be configured to communicate with the RAN 104, e.g., according to a non-access stratum (NAS) protocol. In some embodiments, RAN 104 can be configured to communicate with the CN 101 or a component thereof (e.g., the AMF 108) in a N2 interface, e.g., in a control plane between a base station of the RAN 104 and the AMF 108. In some embodiments, the RAN 104 can be configured to communicate with the UPF 106 in a N3 interface, e.g., in a user plane. In some embodiments, the AMF 108 and/or the SMF 110 can be configured to communicate with other services or network entities within the CN 101 in various different interfaces and/or according to various different protocols. For instance, in some embodiments, the AMF 108 and/or the SMF 110 can be configured to communicate with the AUSF 120 in a Nausf interface or an N12 interface. In some embodiments, the AMF 108 and/or the SMF 110 can be configured to communicate with the NSSF 122 in an Nnssf interface. In some embodiments, the AMF 108 and/or the SMF 110 can be configured to communicate with the NRF 124 in a Nnrf interface. In some embodiments, the AMF 108 and/or the SMF 110 can be configured to communicate with the PCF 114 in a Npcf interface or an N7 interface. In some embodiments, the AMF 108 and/or the SMF 110 can be configured to communicate with the NWDAF 126 in a Nnwdaf interface. In some embodiments, the AMF 108 and/or the SMF 110 can be configured to communicate with the UDM 118 in a Nudm interface, an N8 interface, or an N10 interface. In some embodiments, the AMF 108 and/or the SMF 110 can be configured to communicate with the AS/AF 112 in a Naf interface. In some embodiments, the SMF 110 can be configured to communicate with the UPF 106 in a N4 interface, which can act as a bridge between the control plane and the user plane, such as acting as a conduit for a Protocol Data Unit (PDU) session during which information is transmitted between, e.g., the UE 102 and the CN 101 or components/services thereof.

It will be appreciated that certain example embodiments described herein arise in the context of a telecommunications network, including but not limited to a telecommunications network that conforms to and/or otherwise incorporates aspects of a 5th generation (5G) architecture. While FIGS. 1-3 illustrate various configurations and/or components of an example architecture of the communications network 100, many other systems, system configurations, networks, network entities, and pathways/protocols for communication therein are contemplated and considered within the scope of this present disclosure.

While the methods, devices/apparatuses, and computer program products/codes described herein are described within the context of a 5th generation core network (5GC) and system, such as illustrated in FIGS. 1-3 and described hereinabove, the described methods, devices, and computer program products can nevertheless be applied in a broader context within any suitable telecommunications system, network, standard, and/or protocol. It will be appreciated that the described methods, devices, and computer program products can further be applied to yet undeveloped future networks and systems as would be apparent to one skilled in the art in light of the present disclosure.

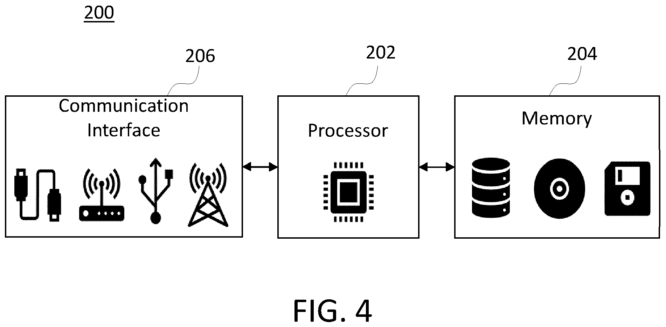

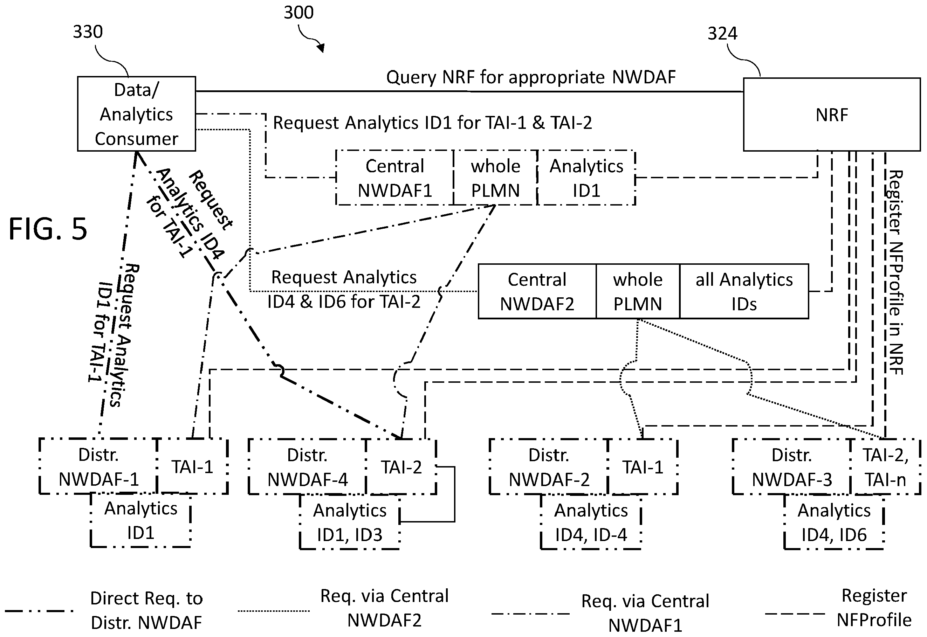

Turning now to FIG. 4, examples of an apparatus that may be embodied by the user equipment or by a network entity, such as a server or other computing device, e.g., user equipment (UE), Network Repository Function (NRF), Access and Mobility Management Function (AMF), or Session Management Function (SMF), are depicted in accordance with example embodiments of the present disclosure. As described below in conjunction with the flowcharts, block diagrams, or the like of FIGS. 5-11, the apparatus 200 of an example embodiment can be configured to perform some or all of the functions described herein. In any instance, the apparatus 200 can more generally be embodied by a computing device, such as a server, a personal computer, a computer workstation, a cloud computing entity, or any other type of computing device including those functioning as user equipment and/or a component of a wireless network or a wireless local area network, e.g., an AMF, NRF, PCF, SMF, etc. Regardless of the manner in which the apparatus 200 is embodied, the apparatus of an example embodiment can be configured as shown in FIG. 4 so as to include, be associated with or otherwise be in communication with a processor 202 and a memory device 204 and, in some embodiments, and/or a communication interface 206. Although not illustrated, the apparatus of an example embodiment may also optionally include a user interface, such as a touch screen, a display, a keypad or the like.

The processor 202 (and/or co-processors or any other circuitry assisting or otherwise associated with the processor) can be in communication with the memory device 204 via a bus for passing information among components of the apparatus 200. The memory device can include, for example, one or more volatile and/or non-volatile memories, such as a non-transitory memory device. In other words, for example, the memory device can be an electronic storage device (e.g., a computer readable storage medium) comprising gates configured to store data (e.g., bits) that can be retrievable by a machine (e.g., a computing device like the processor). The memory device can be configured to store information, data, content, applications, instructions, or the like for enabling the apparatus to carry out various functions in accordance with an example embodiment. For example, the memory device could be configured to buffer input data for processing by the processor. Additionally or alternatively, the memory device could be configured to store instructions for execution by the processor.

The apparatus 200 can, in some embodiments, be embodied in various computing devices as described above. However, in some embodiments, the apparatus can be embodied as a chip or chip set. In other words, the apparatus can comprise one or more physical packages (e.g., chips) including materials, components and/or wires on a structural assembly (e.g., a baseboard). The structural assembly can provide physical strength, conservation of size, and/or limitation of electrical interaction for component circuitry included thereon. The apparatus can therefore, in some cases, be configured to implement an embodiment on a single chip or as a single "system on a chip." As such, in some cases, a chip or chipset can constitute means for performing one or more operations for providing the functionalities described herein.

The processor 202 can be embodied in a number of different ways. For example, the processor can be embodied as one or more of various hardware processing means such as a coprocessor, a microprocessor, a controller, a digital signal processor (DSP), a processing element with or without an accompanying DSP, or various other circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor can include one or more processing cores configured to perform independently. A multi-core processor can enable multiprocessing within a single physical package. Additionally or alternatively, the processor can include one or more processors configured in tandem via the bus to enable independent execution of instructions, pipelining and/or multithreading.

In an example embodiment, the processor 202 can be configured to execute instructions stored in the memory device 204 or otherwise accessible to the processor. Alternatively or additionally, the processor can be configured to execute hard coded functionality. As such, whether configured by hardware or software methods, or by a combination thereof, the processor can represent an entity (e.g., physically embodied in circuitry) capable of performing operations according to an embodiment of the present disclosure while configured accordingly. Thus, for example, when the processor is embodied as an ASIC, FPGA or the like, the processor can be specifically configured hardware for conducting the operations described herein. Alternatively, as another example, when the processor is embodied as an executor of instructions, the instructions can specifically configure the processor to perform the algorithms and/or operations described herein when the instructions are executed. However, in some cases, the processor can be a processor of a specific device (e.g., an encoder and/or a decoder) configured to employ an embodiment of the present disclosure by further configuration of the processor by instructions for performing the algorithms and/or operations described herein. The processor can include, among other things, a clock, an arithmetic logic unit (ALU) and logic gates configured to support operation of the processor.

In embodiments that include a communication interface 206, the communication interface can be any means such as a device or circuitry embodied in either hardware or a combination of hardware and software that is configured to receive and/or transmit data from/to a network and/or any other device or module in communication with the apparatus 200, such as an NF, NRF, a base station, an access point, SCP, UE 102, radio access network, core network services, an application server/function, a database or other storage device, etc. In this regard, the communication interface can include, for example, an antenna (or multiple antennas) and supporting hardware and/or software for enabling communications with a wireless communication network. Additionally or alternatively, the communication interface can include the circuitry for interacting with the antenna(s) to cause transmission of signals via the antenna(s) or to handle receipt of signals received via the antenna(s). In some environments, the communication interface can alternatively or also support wired communication. As such, for example, the communication interface can include a communication modem and/or other hardware/software for supporting communication via cable, Digital Subscriber Line (DSL), Universal Serial Bus (USB) or other mechanisms. In some embodiments, a session management function can comprise a 5GC session management function for any suitable Control and User Plane Separation (CUPS) architecture, such as for the Gateway General Packet Radio Service Support Node (GGSN-C), Trusted Wireless Access Gateway (TWAG-C), Broadband Network Gateway Control and User Plane Separation (BNG-CUPS), N4-interface, Sxa-interface, Sxb-interface, Sxc-interface, Evolved Packet Core (EPC) Secure Web Gateway Control Plane Function (SWG-C), EPC Packet Data Network Gateway Control Plane Function (PGW-C), EPC Traffic Detection Function for Control Plane (TDF-C), and/or the like.

As illustrated, the apparatus 200 can include a processor 202 in communication with a memory 204 and configured to provide signals to and receive signals from a communication interface 206. In some embodiments, the communication interface 206 can include a transmitter and a receiver. In some embodiments, the processor 202 can be configured to control the functioning of the apparatus 200, at least in part. In some embodiments, the processor 202 can be configured to control the functioning of the transmitter and receiver by effecting control signaling via electrical leads to the transmitter and receiver. Likewise, the processor 202 can be configured to control other elements of apparatus 200 by effecting control signaling via electrical leads connecting the processor 202 to the other elements, such as a display or the memory 204.

The apparatus 200 can be capable of operating with one or more air interface standards, communication protocols, modulation types, access types, and/or the like. Signals sent and received by the processor 202 can include signaling information in accordance with an air interface standard of an applicable cellular system, and/or any number of different wireline or wireless networking techniques, comprising but not limited to Wi-Fi, wireless local access network (WLAN) techniques, such as Institute of Electrical and Electronics Engineers (IEEE) 802.11, 802.16, 802.3, Asymmetric Digital Subscriber Line (ADSL), Data Over Cable Service Interface Specification (DOCSIS), and/or the like. In addition, these signals can include speech data, user generated data, user requested data, and/or the like.

For example, the apparatus 200 and/or a cellular modem therein can be capable of operating in accordance with various 1st generation (1G) communication protocols, 2nd generation (2G or 2.5G) communication protocols, 3rd generation (3G) communication protocols, 4th generation (4G) communication protocols, 5th generation (5G) communication protocols, Internet Protocol Multimedia Subsystem (IMS) communication protocols (for example, Session Initiation Protocol (SIP) and/or the like. For example, the apparatus 200 can be capable of operating in accordance with 2G wireless communication protocols Interim Standard 136 (IS-136), Time Division Multiple Access (TDMA), Global System for Mobile Communications (GSM), Interim Standard 95 (IS-95), Code Division Multiple Access (CDMA), and/or the like. In addition, for example, the apparatus 200 can be capable of operating in accordance with 2.5G wireless communication protocols General Packet Radio Service (GPRS), Enhanced Data GSM Environment (EDGE), and/or the like. Further, for example, the apparatus 200 can be capable of operating in accordance with 3G wireless communication protocols, such as Universal Mobile Telecommunications System (UMTS), Code Division Multiple Access 2000 (CDMA2000), Wideband Code Division Multiple Access (WCDMA), Time Division-Synchronous Code Division Multiple Access (TD-SCDMA), and/or the like. The NA 200 can be additionally capable of operating in accordance with 3.9G wireless communication protocols, such as Long Term Evolution (LTE), Evolved Universal Terrestrial Radio Access Network (E-UTRAN), and/or the like. Additionally, for example, the apparatus 200 can be capable of operating in accordance with 4G wireless communication protocols, such as LTE Advanced, 5G, and/or the like as well as similar wireless communication protocols that can be subsequently developed. In some embodiments, the apparatus 200 can be capable of operating according to or within the framework of any suitable CUPS architecture, such as for the gateway GPRS support node (GGSN-C), trusted wireless access gateway (TWAG-C), broadband network gateways (BNGs), N4-interface, Sxa-interface, Sxb-interface, Sxc-interface, evolved packet core (EPC) SWG-C, EPC PGW-C, EPC TDF-C, and/or the like. Indeed, although described herein in conjunction with operation with a 5G system, the apparatus and method may be configured to operate in conjunction with a number of other types of systems including systems hereinafter developed and implemented.

Some of the embodiments disclosed herein can be implemented in software, hardware, application logic, or a combination of software, hardware, and application logic. The software, application logic, and/or hardware can reside on memory 204, the processor 202, or electronic components, for example. In some example embodiments, the application logic, software or an instruction set is maintained on any one of various conventional computer-readable media. In the context of this document, a "computer-readable medium" can be any non-transitory media that can contain, store, communicate, propagate or transport the instructions for use by or in connection with an instruction execution system, apparatus, or device, such as a computer or data processor circuitry, with examples depicted at FIG. 4, computer-readable medium can comprise a non-transitory computer-readable storage medium that can be any media that can contain or store the instructions for use by or in connection with an instruction execution system, apparatus, or device, such as a computer.

With regard to systems, networks, devices, protocols, and methods such as those described above with regard to FIGs. 1-4, the present disclosure descries many embodiments in the context of a 5G system (5GS), however any other suitable network, communications system, and/or associated devices and network entities can embody the disclosed invention(s), including but not limited to 2nd generation (2G), 3rd generation (3G), 4th generation (4G), Long Term Evolution (LTE), and the like. According to some example embodiments, a 5G network is provided that has been designed as a Service Based Architecture (SBA), e.g., a system architecture in which the system functionality is achieved by a set of NFs providing services to other authorized NFs to access their services. As part of 3GPP Release-15 and Release-16, architecture enhancements for a 5G system (5GS) has been proposed to support network data analytics services, for example specified in 3GPP TS 23.288 version 16.4.0. As described herein, the inventors have identified multiple issues and possible enhancements in regards to the deployment of multiple NWDAFs. For example, the deployment of multiple network data analytics functions (NWDAFs), e.g., in a public land mobile network (PLMN), was found to be inefficient, overly computationally complex, and/or may require overly complex signaling, among other deficiencies. Furthermore, there is not a standard approach for registering multiple NWDAFs (or NWDAF instances) in the NRF with the aim to optimize analytics inputs and output data in case of multiple NWDAF deployments. Also, there is not currently a standard process for network functions and/or other NWDAFs to discover suitable and available NWDAFs for obtaining analytics data, for example if the area of interest spans multiple NWDAFs. Likewise, there is not currently a standard process for combining or aggregating multiple different analytics outputs from multiple NWDAFs into a single result, e.g., if requested by a data consumer or analytics consumer.

As such, described herein, in accordance with various embodiments, are example systems, apparatus, methods, and solutions for enhancing multiple NWDAF deployment and analytics output aggregation, among other features and improvements. For example, in some embodiments, the described enhancements and approaches can be used for deployment of multiple NWDAFs, e.g., within a particular public land mobile network (PLMN). Some processes or methods may be carried out by one or more network repository functions (NRFs). In some embodiments, an NRF may be configured to allow network functions to discover services offered by other network functions within the communication network. In some embodiments, an NRF may be configured to support service discovery functions by maintaining a set of NF profiles and a set of available NF instances.

As such, described herein are an overall framework and deployment architecture of multiple NWDAFs. In some embodiments, the deployment architecture may be similar to a distributed NWDAF architecture and may include an aggregator function which can be also called a "Central NWDAF." In some embodiments, one or more functionalities of a described aggregator function, according to some embodiments, are proposed for registration procedures, discovery procedures, and analytics procedures.

In accordance with some embodiments, an enhanced procedure is provided for registering one or more NWDAF instances as well as aggregator function into the NRF. In some embodiments, such a registration procedure can include enhanced NRF management procedures.

In accordance with some embodiments, enhancements to NRF functionalities are provided. In some embodiments, NRF functionality enhancements can be operable to support efficient registration and discovery of NWDAF by data consumer(s)/analytics consumer(s). In some embodiments, such NRF functionality enhancements may be specific to NRF logic to return an aggregator function and to discovery procedures for Central NWDAFs.

In accordance with some embodiments, solutions are provided for enabling an aggregator function (also known as a Central NWDAF) to provide an analytics output to data consumer(s)/analytics consumer(s) (e.g., a Network Function and/or other NWDAF(s)). In some embodiments, such a system and process may be operable the collecting of data and/or analytics output from more than one NWDAF instance. In some embodiments, a system and process can be provided for aggregating received multiple analytics data into a requested analytics identification (ID) via additional analytics metadata information provided to the aggregator function.

FIG. 5 illustrates a system 300 for distributed NWDAF deployment with a central NWDAF, in accordance with an example embodiment. As illustrated, the system 300 can include one or more data/analysis consumers 330 in communication with an NRF 324. In some embodiments, the NRF 324 can be a part of a communications network, such as the communications network 100. In some embodiments, the data/analysis consumers 330 can comprise a network function such as an AMF 108, an SMF 110, other NWDAFs 126, or other network entities.

In some embodiments, in an instance in which the system 300 is configured such that multiple NWDAFs 126 (or NWDAF instances) in a particular PLMN can be deployed, the system 300 may comprise an aggregator function (e.g., a Central NWDAF ("NWDAF-C")). In some embodiments, this architecture can provide various benefits and functionalities with regard to the deployment of NWDAFs 126 and the aggregation of multiple data outputs from multiple deployed NWDAFs 126 to data/analysis consumers 330.

For instance, in some embodiments, each NWDAF 126 may target one or more certain subset(s) of the data sources (e.g., NF instances in a particular geographic area, such as an Area of Interest represented by one or more Tracking Area Identities (TAIs), or NFs for one or more specific groups of UEs) and/or certain analytics IDs. In some embodiments, a data source can comprise an Application Function (AF), a Network Function (NF), an Operations, Administration, and Maintenance (OAM) system, or the like. In some embodiments, the system 300 may be configured such that each NWDAF 126 may be configured to support and provide one or more analytics outputs or analytics IDs. In some embodiments, the system 300 may be configured such that each NWDAF instance may be part of an "NWDAF Set." In some embodiments, the system 300 may be configured such that an NWDAF 126 is configured to provide additional information to support the aggregation of data and/or analytics output provided by the NWDAF 126. In some embodiments, the additional information provided by one or more NWDAFs 126 can be referred to as an "aggregation support indication." In some embodiments, an NWDAF 126 may be configured to register with the NRF 324 and to indicate the same in an associated NFProfile.

In some embodiments, the system 300 may be configured such that certain NWDAFs 126 may be configured to register their profile (e.g., NFProfile) in the NRF 324, thereby indicating that the NWDAF 126 can be discovered only by a central NWDAF or one or more other NWDAF(s), e.g., which may be invisible to a data/analytics consumer 330 other than another NWDAF. In some embodiments, the NWDAF 126 may only be discoverable by a central NWDAF or another NWDAF, for example, in an instance in which the data/analytics consumer 330 is a 5G Core Network Function such as an AMF, an SMF, or the like. In some embodiments, the profile for the NWDAF 126 may be updated by including an "internal NWDAF" (or another similar indication) indicator in the NFProfile of the particular NWDAF 126 that is configured to only be discovered by a central NWDAF or another NWDAF (rather than via a data/analytics consumer 330) and/or by communication the same with the NRF 324 or directly with the data/analytics consumer 330 while registering the NWDAF 126 in the NRF 324.

In some embodiments, one or more aggregator functions (also referred to herein as 'central NWDAFs') may be deployed in the system 300 (e.g., within the PLMN). In some embodiments, the one or more aggregator functions (central NWDAFs), once deployed in the system 300, may provide 'aggregator' functionalities, which can include the combination of collected analytics data and/or analytics output. In some embodiments, the collected analytics data and/or analytics output may be collected from two or more NWDAFs 126 and/or from different Network Functions as a data source. In some embodiments, a Central NWDAF can be deployed as a "Central NWDAF Set."

In some embodiments, a Central NWDAF (e.g., an NWDAF with aggregator function capabilities) can have various functionalities for supporting the aggregation or combination of analytics data and/or analytics output. For instance, in some embodiments, a Central NWDAF may be configured such that its service area includes multiple TAIs and covers most or all of the PLMN. In some embodiments, to support providing Analytics for the entire PLMN, at least one NWDAF may be provided per Application ID covering the entire PLMN. In some embodiments, the Central NWDAF may be configured to support one or multiple Analytics IDs. In some embodiments, the Central NWDAF may be configured to register itself in the NRF 324. In some embodiments, the Central NWDAF may indicate to the NRF 324, during registration with the NRF 324, that the Central NWDAF is configured for the additional functionality of analytics data/analytics output aggregation. In some embodiments, the NRF 324 may be configured to indicate that the Central NWDAF (NWDAF-C) has "aggregator" functionality by adding an indication of the same to the NFProfile, e.g., for the NWDAF-C. In some embodiments, such an indication in the NFProfile may also be used during an NF Discovery procedure and/or to return a 'most suitable' NWDAF 126. In some embodiments, "aggregation" functionality support may be indicated by a new dedicated "aggregator function indicator," which, for example, may be part of the NFProfile that the particular NWDAF 126 provides to the NRF 324 during its registration procedure. In some embodiments, alternatively or in addition to the above-described "aggregator function indicator" approach for indicating the functionalities of the NWDAF 126 to a data/analytics consumer 330, the NRF 324 may include a "priority" value in the NFProfile. In some embodiments, a "priority" value may be included to indicate to the NRF 324 that it should return the 'most suitable' NWDAF 126 to the data/analytics consumer 330 (e.g, NF Consumer). In some embodiments, the NRF 324 may assign a higher priority to the Central NWDAF and a lower priority to other distributed NWDAFs 126. In some embodiments, the priority attribute may be already specified as part of the NFProfile or may be added by the NRF 324 or another suitable entity.

In some embodiments, the Central NWDAF may be configured to aggregate collected analytics data and/or analytics output from different Data Sources, e.g., collected from two or more NWDAF instances and/or from different Network Functions as data sources. In some embodiments, the aggregation functionality may be an additional capability of the Central NWDAF, e.g., that can be initiated when the system 300 is configured for multiple NWDAF deployment, or can be a permanent functionality of the system 300/Central NWDAF. In some embodiments, the Central NWDAF may also provide regular analytics capabilities in line with other NWDAFs 126, e.g., by supporting deriving the Analytics output for the covered Analytics ID(s) from raw data provided by a Data Source. In some embodiments, in some embodiments in which the Central NWDAF may also provide regular analytics capabilities, the system 300 may be configured such that, if Analytics Output is already available for some part of the requested area but another area is not covered by any distributed NWDAF, the Central NWDAF may be deployed to provide the Analytics Output for that area and also aggregates the Analytics Output from said area with the available information provided by the other distributed NWDAFs within the requested area.

As illustrated in FIG. 5, the system 300 can comprise multiple NWDAFs 126, and the data/analytics consumer 330 can be configured to query the NRF 324 for the appropriate NWDAF 126 designated as the Central NWDAF. In some embodiments, a request for Analytics data can be sent via distributed NWDAFs 126 and/or via the Central NWDAF. In some embodiments, the request for Analytics data can be sent from the data/analytics consumer 330 to the NRF 324 and/or from the NRF 324 to the data/analytics consumer 330.

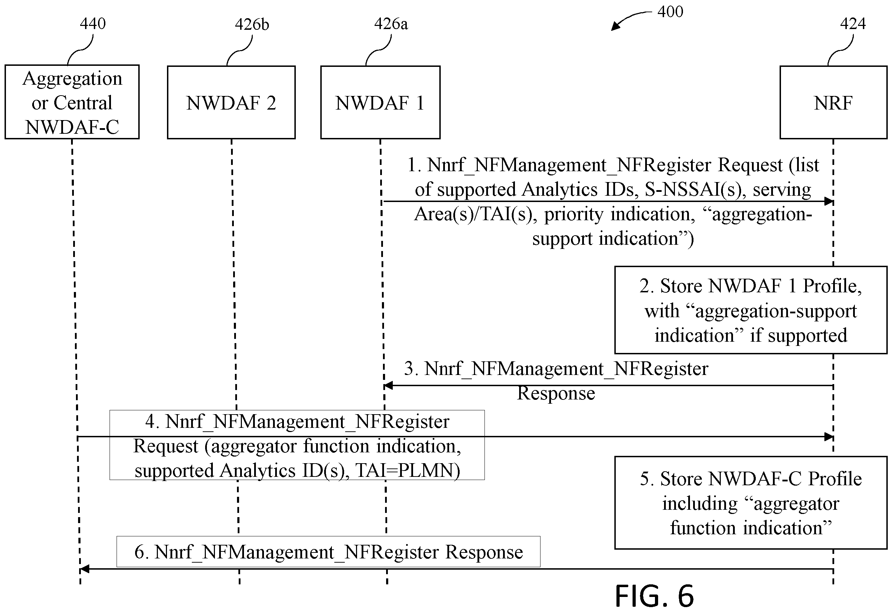

FIG. 6 illustrates a system 400 for registering one or more NWDAFs 426a,b and/or a Central NWDAF 440 with an NRF 424, in accordance with an example embodiment. In some embodiments, the NRF 424 may receive an Nnrf_NFManagement_NFRegister Request. In some embodiments, the NRF 424 may receive the Nnrf_NFManagement_NFRegister Request from a NWDAF 426a or 426b. In some embodiments, the Nnrf_NFManagement_NFRegister Request may comprise a list of supported Analytics ID, S-NSSAI(s), serving Area(s), TAI(s), a priority indication, and/or an aggregation-support indication. In some embodiments, the NRF 424 can store the NWDAF profile for the NWDAF 426a or 426b, including the aggregation-support indication, if supported. In some embodiments, the NRF 424 can then transmit an Nnrf_NFManagement_NFRegister Response to or towards the NWDAF 426a or 426b. In some embodiments, the NRF 424 may then receive, e.g., from the Central NWDAF 440, an Nnrf_NFManagement_NFRegister Request. In some embodiments, the Nnrf_NFManagement_NFRegister Request can comprise an aggregator function indication, supported Analytics ID(s), and/or TAI=PLMN. In some embodiments, the NRF 424 can then store the Central NWDAF Profile, including the aggregator function indication. Additionally, the NRF 424 can then transmit an Nnrf_NFManagement_NFRegister Response to or towards the Central NWDAF 440.

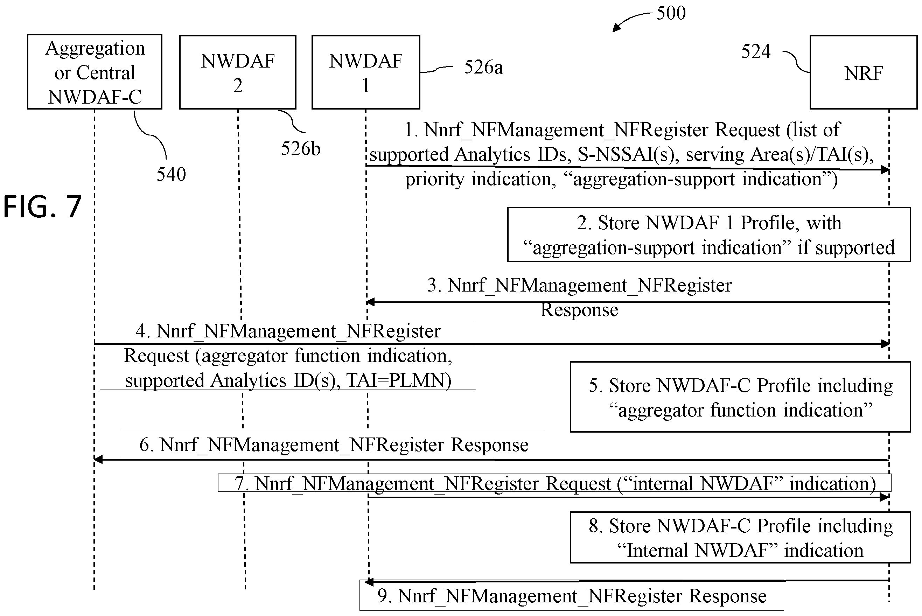

FIG. 7 illustrates a system 500 for registering one or more NWDAFs 526a,b and/or a Central NWDAF 540 with an NRF 524, in accordance with an example embodiment. In some embodiments, the NRF 524 may receive, e.g., from one or more NWDAFs 526a,b, an Nnrf_NFManagement_NFRegister Request. In some embodiments, the Nnrf_NFManagement_NFRegister Request can comprise a list of supported Analytics ID, S-NSSAI(s), serving Area(s), TAI(s), one or more priority indications, and/or an aggregation-support indication. In some embodiments, the NRF 524 can store the Nnrf_NFManagement_NFRegister Request or components thereof. In some embodiments, the NRF 524 can store an NWDAF profile with the aggregation-support indicator, if supported. In some embodiments, the NRF 524 can transmit an Nnrf_NFManagement_NFRegister Response to or towards the NWDAF 526a or the NWDAF 526b. In some embodiments, the Central NWDAF 540 can then transmit a Nnrf_NFManagement_NFRegister Request to or towards the NRF 524. In some embodiments, the Nnrf_NFManagement_NFRegister Request can comprise an aggregator function indication, supported Analytics ID(s), TAI=PLMN, and/or the like. In some embodiments, the NRF 524 can then store a Central NWDAF Profile (NWDAF-C Profile) including the aggregator function indication. In some embodiments, the NRF 524 can then transmit an Nnrf_NFManagement_NFRegister Response to or towards the Central NWDAF 540. In some embodiments, the NWDAF 526a or the NWDAF 526b can then transmit an Nnrf_NFManagement_NFRegister Request to or towards the NRF 524. In some embodiments, the Nnrf_NFManagement_NFRegister Request can include an internal NWDAF indication. In some embodiments, the NRF 524 can then store a Central NWDAF profile (NWDAF-C Profile) including the internal NWDAF indication. In some embodiments, the NRF 524 can then transmit an Nnrf_NFManagement_NFRegister Response to or towards the NWDAF 526a or the NWDAF 526b.

As illustrated in FIG. 7, for instance, an NWDAF registration procedure may include a distributed NWDAF (e.g., 526a) registering its NFProfile with the NRF 524. In some embodiments, the registration request message and/or the NFProfile can comprise an indication, if supported by the particular NWDAF Instance, indicating "aggregation-support". In some embodiments, this indicator may be operable for use by an NF Consumer, such as the Central NWDAF 540, e.g., to request additional information including or in addition to Analytics-ID and Analytics output. For instance, in some embodiments, the additional information that can be requested of the NRF 524 may include metadata, such as a timestamp, where data is coming from and/or where data is going to (Data from - to), the number of samples, the number of samples per group and/or category (if applicable), Area of Interest information (e.g., TAI(s)), Analytics Model ID(s), and/or an Analytics Model pointer. In some embodiments, the Analytics Model pointer may be configured to retrieve the Analytics Model, if applicable, specific configuration of the analytics function, and/or the like. In some embodiments, the additional information that can be requested of the NRF 524 may include raw data, e.g., raw analytics data. In some embodiments, the additional information that can be requested of the NRF 524 may include other information that may be useful to the requesting entity, e.g., information that may be useful to a requesting Central NWDAF 540 for aggregating analytics outputs provided by two or more distributed NWDAFs (526a,b).

In some embodiments, the NRF 524 can, upon receipt of the registration request from the NWDAF 526a, store an NFProfile of this NWDAF instance. If indicated by this NWDAF instance, the NRF 524 may also store an "aggregation-support indication" in the NFProfile for this NWDAF instance. In some embodiments, the NRF 524 may reply to the NWDAF 526a with the Nnrf_NFManagement_NFRegister Response message. In some embodiments, an aggregator function (e.g., Central NWDAF 540; also referred to herein as NWDAF-C), may then register with the NRF 524 and send the Nnrf_NFmanagement_NFRegister Request to the NRF 524. In some embodiments, the request provided to the NRF may comprise Supported Analytics ID(s), Service Area or TAI(s) = PLMN, an Aggregator function indicator, and/or the like. In some embodiments, the Aggregator function indicator may comprise an indication that the Central NWDAF 540 is configured for an additional functionality (e.g., as compared to other distributed NWDAF(s)), such as the functionality of an "aggregator".

In some embodiments, the indication may optionally comprise an appropriate "priority" value to the NRF 524, e.g., a lower priority value, which can then be used by the NRF 524, along with other criteria, to select and return one or more suitable NWDAF(s) (e.g., 526a,b), e.g., a "one or more most suitable NWDAFs" to a NF Consumer.

In some embodiments, the NRF 524 can then store the NFProfile for the Central NWDAF 540 (NWDAF-C), along with "aggregator function indication." In some embodiments, the aggregator function indication may comprise or indicate that the Central NWDAF 540 can be used as an "aggregation" function or Central NWDAF. In some embodiments, the NFProfile of the Central NWDAF 540 may also indicate a corresponding "Set_ID" if this Central NWDAF 540 belongs to a Set. In some embodiments, the NRF 540 may maintain a "priority" value based on the indication received from the Central NWDAF 540 and other criteria. In some embodiments, the NRF 524 may then confirm successful registration to the Central NWDAF 540.

In some embodiments, the NWDAF 526a may be one of the distributed NWDAFs as part of the system 500. In some embodiments, the NWDAF 526a may then register its NFProfile with the NRF 540. In some embodiments, the NFProfile may then comprise an additional indication, if supported by this NWDAF Instance, indicating "Internal NWDAF". In some embodiments, the "Internal NWDAF" indication may indicate that the NWDAF 526a can be discovered only by the Central NWDAF 540 or other NWDAF(s), e.g., these are invisible to analytics consumer other than NWDAFs, for example, in an instance in which the analytics consumer is a 5G Core Network Function such as AMF, SMF, and so on.

In some embodiments, the NRF 524, upon receipt of the registration request from the NWDAF 526a, can be configured to store a NFProfile of this NWDAF instance. In some embodiments, if indicated by this NWDAF instance, the NRF 524 may also store an "Internal NWDAF" indication in the NFProfile for this NWDAF instance. In some embodiments, the NRF 524 may then confirm successful registration to the NWDAF 526b.

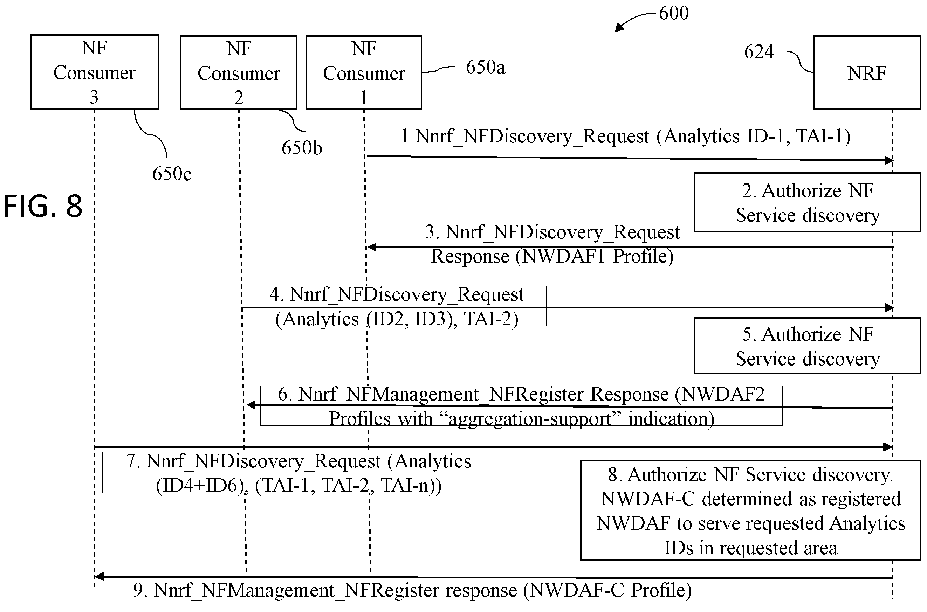

FIG. 8 illustrates a system 600 configured for discovering, using one or more NF Consumers, one or more NWDAFs with an NRF 624, in accordance with an example embodiment. In some embodiments, the system 600 can comprise a plurality of NF Consumers 650a,b,c. In some embodiments, the NF Consumer 650a may be interested in Analytics ID-1 over Area of Interest TAI-1, and so it may send a request for the same to the NRF 624. In some embodiments, the NF Consumer 650a can receive, in response to its request for the Analytics ID-1 over the Area of Interest TAI-1, a corresponding response including the NFProfile of a distributed NWDAF (e.g., distributed NWDAF-1). Continuing with the same example, in some embodiments, NWDAF-1 can provide, e.g., to the NF Consumer 650a, Analytics for Analytics ID-1 and serving area TAI-1. In some embodiments, the method for providing said Analytics to NF Consumers may be in accordance with TS 23.502 Rel-16.

In some embodiments, the NF Consumer 650b may be interested in Analytics ID-2 and Analytics ID-3 over Area of Interest TAI-2, and so it may send a request for the same to the NRF 624. In some embodiments, the NF Consumer 650b may receive, in response to its request for the Analytics ID-2 and Analytics ID-3 over the Area of Interest TAI-2, a corresponding response, e.g., from a Central NWDAF. In some embodiments, such a request can be served by one of the distributed NWDAFs, e.g., NWDAF2, which may be configured to provide Analytics and/or aggregated Analytics in association with multiple IDs or Areas of Interest, e.g., in association with Analytics ID-2 and Analytics ID-3 for serving area TAI-2. In some embodiments, in an instance in which a Central NWDAF (e.g., NWDAF2) is configured to provide one or more aggregation support functionalities, then these functionalities may be indicated in the NFProfile returned by the NRF 624 to one or more of the NF Consumers 650a,b,c. In some embodiments, this indication that an NWDAF is configured for aggregation support functionalities may be used, for example by the NRF 624 to indicate to the NF Consumers 650a,b,c that the NWDAF is designated as the Central NWDAF. In some embodiments, the NWDAF-C (aggregator NWDAF) may use such an indication of aggregation support functionality to request additional information, such as metadata, pointers to an analytics model, number of samples, or the like, in addition to the Analytics output for the requested Analytics ID.

In some embodiments, the NF Consumer 650c may be interested in Analytics ID-4 and Analytics ID-6, and Areas of Interest that include TAI-1 and TAI-2 to TAI-n. In some embodiments, the NF Consumer 650c may transmit a request for the same to or towards the NRF 624. In some embodiments, upon receiving this request, the NRF 624 may find out that there is no single distributed NWDAF serving the requested Areas of Interest, and the NRF 624 may then reply back to the NF Consumer 650c and send the NWDAF-C profile. In some embodiments, by responding to the NF Consumer 650c with the NWDAF-C profile, the NRF 624 can designate which NWDAF is configured as an "aggregator function" (or Central NWDAF) for the requested Analytic IDs. In some embodiments, to serve such requests, the NRF 624 may implement new functionalities in order to return a 'most suitable' NWDAF rather than returning a relatively less suitable NWDAF for use as the Central NWDAF.

In some embodiments, in an instance in which the requested TAI is not covered by any of the registered distributed NWDAFs, then the NRF 624 may return the NFProfile or the NWDAF-C that is covering the whole PLMN area. In some embodiments, the procedure for returning the NFProfile or the NWDAF-C covering the whole PLMN area may be similar to that described in TS 23.502 Rel-16. In some embodiments, in an instance in which multiple Analytics IDs are requested and all may be served by a specific distributed NWDAF, then the NRF 624 may return that specific distributed NWDAF. In some embodiments, the NRF 624 may return: Option a) an NWDAF-C which has the aggregation function, and/or Option b) both the distributed NWDAF and the NWDAF-C along with some "aggregator function indication", so that the NF Consumer 650a,b,c can select which NWDAF to contact. In some embodiments, option a) may enhance the functionalities of the NRF 624 and may enable the NRF 624 to return only the Central NWDAF in an instance in which the Central NWDAF is configured to serve all requested Analytics IDs for all Areas of Interest. In some embodiments, one of the benefits of option a) is that it is transparent to the NF Consumer, e.g., the NF Consumer does not need to pick one of the two or more NWDAFs and does not need to investigate or consider which of the NWDAFs are configured for aggregation support, among other benefits.

In some embodiments, the NRF 624 may be configured to return the 'most suitable' NWDAF based on a "Priority" indication in the NFProfile of the corresponding NWDAF instances. In some embodiments, the priority indication (which may be similar in form but not in method of use to that described in 3GPP TS 23.510 version V16-3-0) may be a special "priority" setting criteria specifically created for designating the NWDAF-C. In some embodiments, the NWDAF-C may by indicated by a lower priority, e.g., a priority that is lower compared to other distributed NWDAFs, such that the NF Consumer will typically be caused to pick the higher priority distributed NWDAF.

In some embodiments, in an instance in which multiple NWDAF instances are identified that match the requested combination of Analytic ID(s) and Area(s) of Interest (e.g., TAI(s)), the NRF 624 may return the NFProfile for those multiple matching NWDAFs, such as according to the NRF functionality described in 3GPP TS 23.510 version V16-3-0.

In some embodiments, the NRF 624 may indicate in the response message that a particular NWDAF supports "aggregator function" using, e.g., a flag such as an "isAggregator" flag signaled in the response message or indicated in the particular NFProfile of the particular NWDAF having said functionality.

In some embodiments, the NRF 624 may alternativity or additionally send one or more lists of NWDAFs that can serve one or more subsets of the request, back to the NR Consumer 650a,b,c, and leave it up to the NF Consumer 650a,b,c to contact those NWDAFs individually and aggregate the results at the NF Consumer 650a,b,c (data consumer/analytics consumer) side. In some embodiments, this approach may be particularly relevant for instances in which a NWDAF-C needs to identify those distributed NWDAFs that it needs to contact to be able to aggregate the analytics output provided by those NWDAFs in order to meet the request from the NF Consumer 650a,b,c to the NWDAF-C. In that regard, in some embodiments, an approach may be needed in which the Central NWDAF can communicate with the NRF 624 in order to discover, from the NRF 624, the NWDAFs that serve a subset of the Area of Interest requested for one or more particular Analytics IDs. Likewise, it can be important in some embodiments to configure the Central NWDAF to determine which data source (e.g., NF, NWDAF) to contact. Examples of such a further enhanced procedure for supporting network data analytics are therefore provided below.

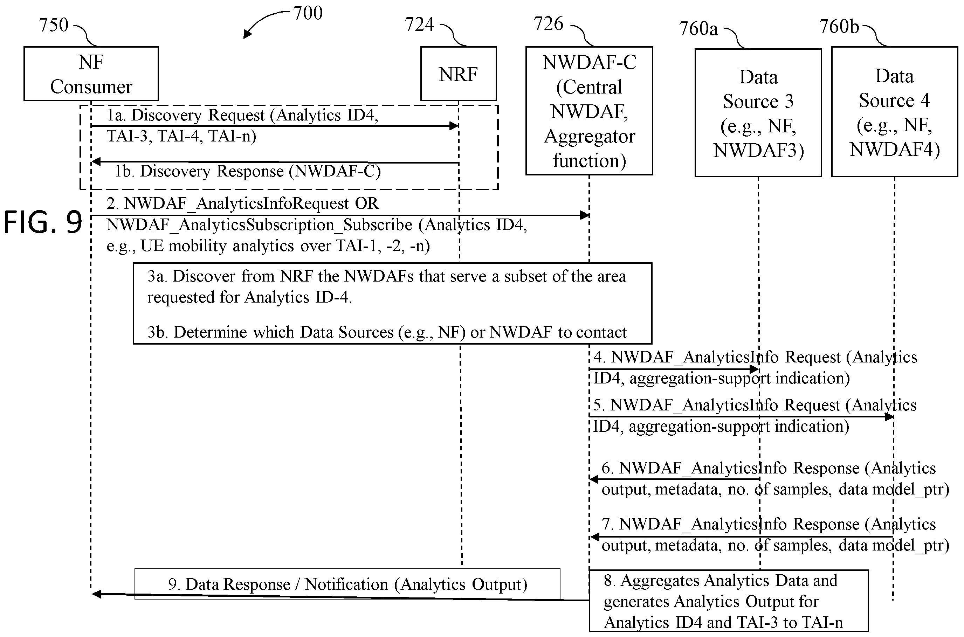

FIG. 9 illustrates a system 700 configured for an NF Consumer 750 to discover, request, and/or subscribe, through an NRF 724, to get Analytics IDs of their Areas of Interest from one or more of a Central NWDAF 726 or various Data Sources 760a,b (e.g., an NF, other NWDAFs). In some embodiments, the NF Consumer 750 may be configured to transmit a discovery request to or towards the NRF 724. In some embodiments, the discovery request may be a message comprising one or more Analytics IDs (e.g., Analytics ID4) for one or more Areas of Interest (e.g., TAI-3, TAI4, TAI-n). In some embodiments, in response to the discovery request received from the NF Consumer 750, the NRF 724 may transmit a discovery response to or towards the NF Consumer 750. In some embodiments, the discovery response may comprise a NWDAF-C profile, e.g., in an instance in which there is no single distributed NWDAF that can cover the request. In some embodiments, the NRF 724 may also consider other NRF logic such as a "Priority" value, such as described elsewhere herein, in determining whether and which NDWAF profile to include in the discovery response.

In some embodiments, in response to the NF Consumer 750 receiving the discovery response from the NRF 724, the NF Consumer 750 can transmit an Analytics information request to or towards the NWDAF-C 726 (Central NWDAF 726). In the Analytics information request, the NF Consumer 750 may provide one or more requested Analytics ID(s), e.g. UE mobility analytics with Analytics ID4, along with one or more requested Area(s) of Interest, e.g., TAI-1, TAI-2, TAI-n).

In some embodiments, once the Central NWDAF 726 receives the Analytics information request from the NF Consumer 750, the Central NWDAF 726 may be configured to discover, e.g., from the NRF 724, a list of distributed NWDAF(s) that can provide the analytics output needed to generate the requested Analytics ID for the requested Area(s) of Interest, e.g., TAI-1, TAI-2, TAI-n. In some embodiments, the Central NWDAF 726 may be configured for new functionalities in order to make such a determination and to generate the requested Analytics.

In some embodiments, corresponding to received request, the Central NWDAF 726 may send, e.g., 'on demand,' one or multiple discovery requests to the NRF 724. In some embodiments, each of the one or multiple discovery requests may result in in the return of a specific NWDAF instance corresponding to the requested Analytics ID for a particular Area of Interest. For example, in some embodiments, the return of a specific NWDAF instance corresponding to the requested Analytics ID for a particular Area of Interest may be achieved by the Central NWDAF 726 re-ordering requested Areas of Interest into multiple TAIs or groups of TAIs, corresponding to different NWDAF instances that support this Analytics ID. In some embodiments, the Central NWDAF 726 may already have information to enable it to re-order the Area(s) of Interest for the purpose of generating the discovery request from the NRF 724. In some embodiments, such discovery requests may use complex queries if supported by the NRF 724.

Alternatively, in some embodiments, the Central NWDAF 724 may have already, *a priori*, discovered/collected the available set of NWDAF instances in the PLMN along with their supported Analytic IDs and Areas of Interest, or such information was by a different means provided/configured to the Central NWDAF 726. In some embodiments, based on this information, the Central NWDAF 726 may identify the appropriate NWDAFs to request the required data from, such that it can aggregate the Data to meet the request received from the NF Consumer 750.

In some embodiments, the discovery request sent to the NRF 724, from the Central NWDAF 726, may include an "aggregation-support" indication, thus requesting the NRF 724 to reply back with, if available, those NWDAF instance(s) which also supports "aggregation-support" functionalities. In some embodiments, the Central NWDAF 726 may also need to collect raw data from one or more Data Sources 760a,b other than a NWDAF, e.g., in case there is no distributed NWDAF covering a specific Area of Interest that is part of the Area of Interest requested by the NF Consumer 750. In some embodiments, when the Central NWDAF 726 needs to collect raw data from one or more Data Sources 760a,b, the Central NWDAF 726 may collect the raw data and produce the required Analytics output for that Area of Interest by itself.

In some embodiments, the Central NWDAF 726 may then finish generating and send the analytics information request to each of the Data Sources 760a,b discovered/determined as described above, e.g., to NWDAF 3 and NWDAF 4 as illustrated in FIG. 9.

In some embodiments, this analytics information request may indicate "aggregation-support indication" to the Data Sources 760a,b, e.g., NWDAF3 and NWDAF4, thereby indicating that the output provided by the Data Sources 760a,b is being requested to be aggregated by the Central NWDAF 726. In some embodiments, the "aggregation-support indication" in the analytics information request may cause the Data Sources 760a,b, e.g., NWDAF3 and NWDAF4, to provide additional information, apart from Analytics output, and to provide the Analytics output and any additional information to the Central NWDAF 726 rather than directly the NF Consumer 750.

In some embodiments, the "aggregation-support" indication may trigger the receiving Data Sources 760a,b (e.g. NWDAFs 3,4) to, apart from replying back to the Central NWDAF 724 with the Analytics output, to provide to the Central NWDAF 724, to support the aggregation of the Analytics by the Central NWDAF 724, one or more of a number of samples, a time period for collected samples, a pointer to data model (e.g., pointer to data-Lake) or storage function, and/or any other information that can be used/is required for the aggregation of the Analytics output by the Central NWDAF 726.

For example, in order for the Central NWDAF 726 to aggregate the avg.load(TAI-1) with avg.load(TAI-2), the Central NWDAF 726 needs to know the number of samples per TAI, e.g., avg.load(TAI1+TAI2) = (no.samples(TAI-1)*avg.load(TAI-1) + no.samples(TAI-2)*avg.load(TAI-2) )/(no.samples(TAI-1) + no.samples(TAI-2)). As such, the Central NDWAF 726 may dictate to the Data Sources 760a,b the additional information to be provided to support aggretation of the Analytics output, or the Central NWDAF 726 may cause one or more of the Data Sources 760a,b or the NRF 724 to dictate said additional information to be provided.

In some embodiments, the Data Sources 760a,b (e.g., NWDAFs3, 4) may reply to the Central NWDAF 726 with the requested Analytics output along with the other information required for the aggregation. In response to receiving the Analytics output and other information required for the aggregation, the Central NWDAF 726 may aggregate the received Analytics data. In some embodiments, a single Analytics output is typically based on the multiple Analytics information received from the Data Sources 760a,b (e.g., NWDAF3 and NWDAF4). In some embodiments, optionally, the Central NWDAF 726 may, at the same time, process and/or aggregate any raw data received with regard to the NF Consumer 750 Analytics request. In some embodiments, the Central NWDAF 726 may implement different logic function and aggregation methods to generate this single analytics output. In some embodiments, the Central NWDAF 726 may then reply to the NF Consumer 750 to provide the Analytics output for the requested analytics ID.

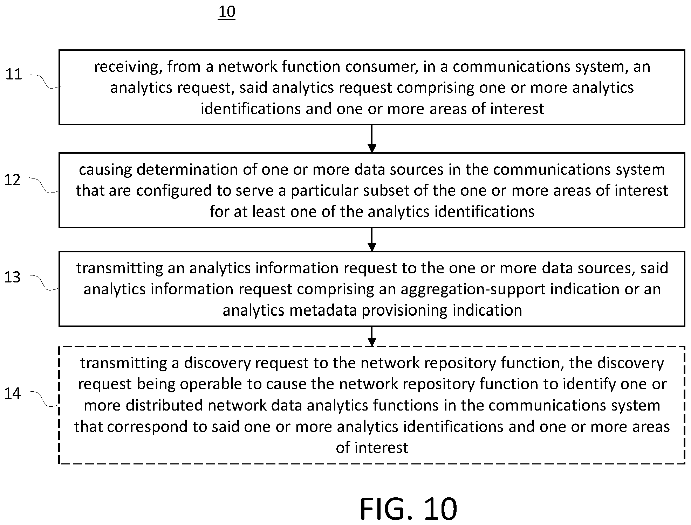

FIG. 10 illustrates a flowchart of the operations of an example method 10 performed by an example apparatus 200 which, in one embodiment, may be embodied by a computer program product comprising computer program code executed by the processor 202. As shown in block 11, apparatus 200 of this example embodiment incudes means, such as the processor 202, the memory 204, the communication interface 206 or the like, for causing receiving, from a network function consumer, in a communications system, an analytics request, said analytics request comprising one or more analytics identifications and one or more areas of interest. As shown in block 12, the apparatus 200 may also include means, such as the processor 202 or the like, for causing causing determination of one or more data sources in the communications system that are configured to serve a particular subset of the one or more areas of interest for at least one of the analytics identifications. As shown in block 13, the apparatus 200 may also include means, such as the processor 202 or the like, for causing transmitting an analytics information request to the one or more data sources, said analytics information request comprising an aggregation-support indication or an analytics metadata provisioning indication. As shown in block 14, the apparatus 200 may, optionally, include means, such as the processor 202 or the like, for causing transmitting a discovery request to the network repository function, the discovery request being operable to cause the network repository function to identify one or more distributed network data analytics functions in the communications system that correspond to said one or more analytics identifications and one or more areas of interest.

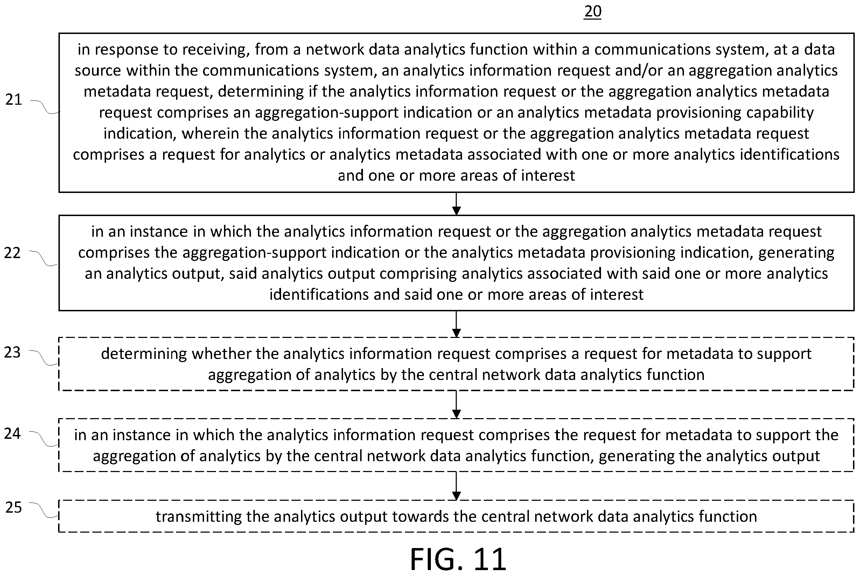

FIG. 11 illustrates another flowchart of the operations of an example method 20 performed by an example apparatus 200 which, in one embodiment, may be embodied by a computer program product comprising computer program code executed by processor 202. As shown in block 21, apparatus 200 of this example embodiment includes means, such as the processor 202, the memory 204, the communication interface 206 or the like, for causing, in response to receiving, from a network data analytics function within a communications system, at a data source within the communications system, an analytics information request and/or an aggregation analytics metadata request, determining if the analytics information request or the aggregation analytics metadata request comprises an aggregation-support indication or an analytics metadata provisioning capability indication, wherein the analytics information request or the aggregation analytics metadata request comprises a request for analytics or analytics metadata associated with one or more analytics identifications and one or more areas of interest. As shown in block 22, apparatus 200 of this example embodiment includes means, such as the processor 202 or the like, for causing, in an instance in which the analytics information request or the aggregation analytics metadata request comprises the aggregation-support indication or the analytics metadata provisioning indication, generating an analytics output, said analytics output comprising analytics associated with said one or more analytics identifications and said one or more areas of interest. As shown in block 23, apparatus 200 of this example embodiment may, optionally, include means, such as the processor 202 or the like, for causing determining whether the analytics information request comprises a request for metadata to support aggregation of analytics by the central network data analytics function. As shown in block 24, apparatus 200 of this example embodiment may, optionally, include means, such as the processor 202 or the like, for causing, in an instance in which the analytics information request comprises the request for metadata to support the aggregation of analytics by the central network data analytics function, generating the analytics output. In some embodiments, the analytics output comprises analytics associated with said one or more analytics identifications and said one or more areas of interest and said metadata to support the aggregation of analytics by the central network data analytics function. As shown in block 25, apparatus 200 of this example embodiment may, optionally, include means, such as the processor 202 or the like, for causing transmitting the analytics output towards the central network data analytics function. In some embodiments, the analytics output is configured for aggregation, by the central network data analytics function, with one or more other analytics outputs from one or more other data sources. In some embodiments, the metadata to support the aggregation of analytics by the central network data analytics function comprises one or more from among: a number of samples, a time period for collected samples, a pointer to a data model, a pointer to a data lake, or a pointer to a storage function.

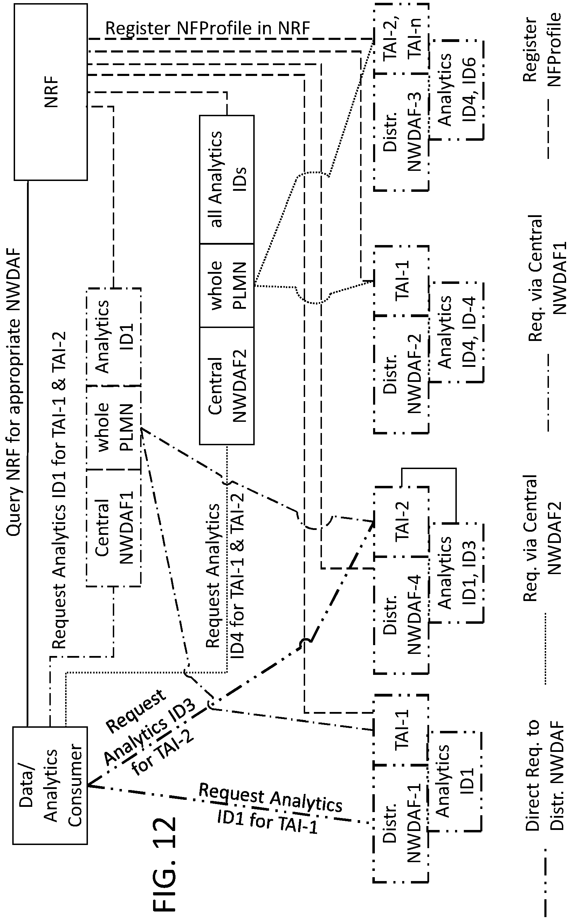

According to other embodiments, when multiple NWDAF instances are deployed, different architectures may be employed such as a hierarchical architecture, a distributed architecture, and/or a co-located architecture. In some embodiments, such as those illustrated in FIGS. 12-15, in a distributed NWDAF architecture, an aggregation function may be collocated with one or more NWDAF (also referred as Central NWDAF) that groups multiple Output Analytics received from multiple distributed NWDAFs to form a single Output Analytics using an "aggregation function" for example: average, count, max, min, range, standard deviation, etc.. In some embodiments, Analytics metadata to be exchanged between distributed NWDAFs and the central NWDAF to allow for the central NWDAF to do proper aggregation. In some embodiments, NWDAF Instances (distributed NWDAFs as well as central NWDAF) may belong to one or more NWDAF-Set. In some embodiments, each NWDAF may provide one or more Output Analytics or Analytics IDs. In some embodiments, each NWDAF may serve one or more certain geographic areas, e.g., Areas of Interest or TAI(s). In some embodiments, at least one Central NWDAF may cover the whole PLMN in order to be able to address any analytics request in case it cannot be covered by any of the distributed NWDAFs. In some embodiments, NWDAF Instance registration and discovery processes may proceed with certain enhancements to facilitate the signaling of aggregation functionalities and the like. Likewise, in some embodiments, data collection and analytics exposure may proceed with certain enhancements to facilitate the signaling of aggregation functionalities and the like.

In some embodiments, in order for the Central NWDAF to do proper aggregation of the different Output Analytics coming from one or more distributed NWDAFs, the Central NWDAF may need to receive additional analytics metadata related to the received Output Analytics, for example: timestamp of analytics generation, number of samples used to generate analytics, applied model to generate analytics, specific configuration of the applied Analytics function or model, etc. Such metadata is necessary for the Central NWDAF to create a single Output Analytics using an "aggregation function" like average, count, max, min, range, standard deviation and so on. As an example, in order to derive a "mobility performance" for the whole PLMN, the Central NWDAF may need to calculate the weighted average based on the mobility performance statistics provided by the distributed NWDAFs, e.g., in order to derive the ratio of successful handovers in the whole PLMN, the number of handovers per area subset as provided by the distributed NWDAFs may need to be taken into account when calculating the overall ratio.

In some embodiments, in a network or system in which multiple distributed NWDAFs are deployed and an aggregation functionality is provided for one or more Central NWDAFs to provide coverage for the whole PLMN, the aggregation of analytics data may be carried out at least in part by Central NWDAFs rather than a Network Repository Function or a Network Function Consumer.

In some embodiments, in a multiple NWDAF deployment scenario, NWDAF Instances may be specialized to provide Analytics for one or more Analytics IDs, and each of the NWDAF instances may serve certain Area(s) of Interest or TAI(s). Additionally, these NWDAF Instances may belong to one (or more) NWDAF Set(s). In some embodiments, these distributed NWDAFs are configured such that enhanced registration and discovery procedures, and enhanced data collection and analytics exposure procedures are possible, as explained herein.

In some embodiments, there may be a need to address cases where an NF Consumer may require Output Analytics for an Area of Interest that is not covered by any single distributed NWDAF Instance and thus requires more than one NWDAFs that collectively serves the requested Area of Interest for the particular Analytics ID. In some embodiments, to support such requests, an NWDAF with aggregation functionality is used. In some embodiments, the NWDAF with aggregation function is also referred to as "Central NWDAF". In some embodiments, this aggregation function may be configured to aggregate Output Analytics and/or output Data specific to one or more Analytic IDs coming from multiple Data Sources, e.g., from one or more distributed NWDAFs and/or from NFs.

In some embodiments, the described system is configured for a deployment where multiple NWDAFs (also referred to as "Distributed NWDAF" or "Distr.NWDAF") exist, whereby some of the NWDAFs are enhanced with an "aggregation functionality" (also referred to a "Central NWDAF" ).

In some embodiments, a "regular" NWDAF with functionality as specified in 3GPP TS 23.288 version 16.4.0. Additionally, in some embodiments, some or all of the distributed NWDAF(s) may support providing additional information referred to as "aggregation analytics metadata", that is related to the generation of Output Analytics by the distributed NWDAF and are needed by Aggregation functionality of the central NWDAF to aggregate the Output Analytics from different NWDAFs, e.g., in those cases where it is not simply adding together output analytics received from multiple NWDAF Instances in order to generate a requested single Output Analytics. In some embodiments, the support to provide aggregation analytics metadata is indicated by an "analytics metadata provisioning capability" indication in the NF Profile when the NWDAF Instance registers to the NRF. In some embodiments, a distributed NWDAF may belong to one or more NWDAF Set, with NF Set functionalities.

In some embodiments, a central NWDAF may be an NWDAF Instance with additional capabilities to aggregate Output Analytics provided by other Data Sources. In some embodiments, the central NWDAF may belong to one or more NWDAF Set, with NF Set functionalities. In some embodiments, the central NWDAF, like other NWDAFs, may also be able to produce Output Analytics based on Input Data from one or more Data Sources. In some embodiments, the central NWDAF includes "aggregator functionality" indication while registering to the NRF. In some embodiments, the central NWDAF includes "aggregation analytics metadata request" indication in the Nnwdaf_AnalyticsInfo_Request or Nnwdaf_AnalyticsSubscription_Subscribe request message sent to other NWDAFs requesting additionally to provide aggregation analytics metadata related to the produced Output Analytics. In some embodiments, per Analytics ID, at least one Central NWDAF may exist which covers the entire PLMN. In some embodiments, the system may be configured in such a way in order to ensure that there is at least one NWDAF in the deployment that can provide the Output Analytics for an Analytics ID for any requested Area of Interest.

In some embodiments, the NRF may store the NFProfile of the NWDAF Instances. In some embodiments, in an instance in which the NWDAF registers itself with indicating "analytics metadata provisioning capability" then this is stored in the respective NF Profile. In some embodiments, the NRF may return the NWDAF(s) matching attributes in the Nnrf_NFDiscovery_Request. However, in an instance in which none of the registered distributed NWDAF Instances match the requested parameters, then the NRF may return the Central NWDAF.

In some embodiments, an analytics consumer may be configured to request or subscribe to receive Analytics for one or more Analytic IDs in a given Area of Interest.

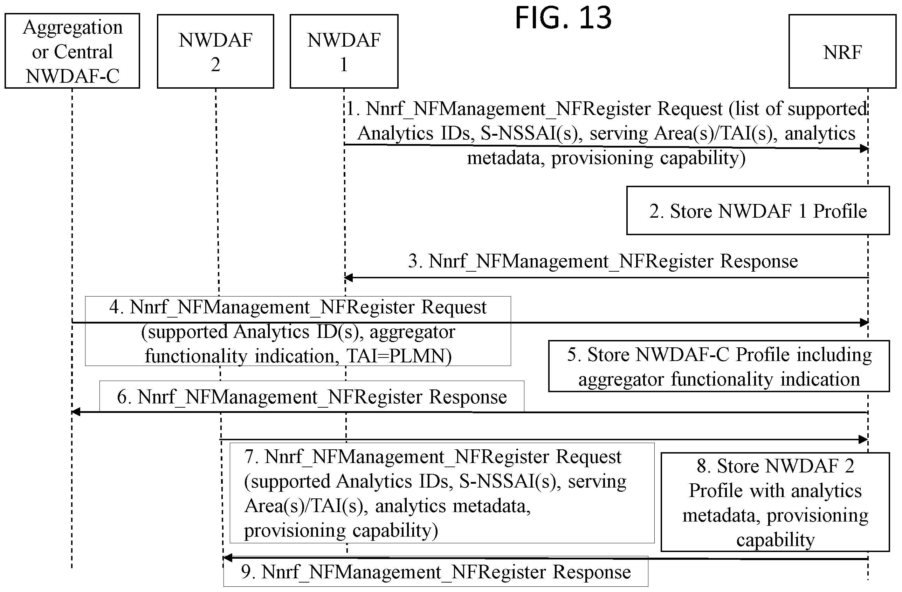

In some embodiments, the NWDAF may register according to the following NWDAF Registration Procedure, and as illustrated in FIG. 13.
1. NWDAF 1 is one of the distributed NWDAFs, and it registers its NFProfile with NRF. This is similar to the existing procedure, e.g., as defined in 3GPP TS 23.502, but with an additional indication, if supported by this NWDAF Instance, indicating "analytics metadata provisioning capability". This indicator is used by NWDAF Service Consumer, for example a Central NWDAF, to request Output Analytics, and if needed, aggregation analytics metadata by including indicator "aggregation analytics metadata request" in the request message.
2. NRF on receipt of the registration request in the above step 1, stores NFProfile of this NWDAF Instance.
3. NRF confirms successful registration to NWDAF 2.
4. Aggregator Function, i.e., Central NWDAF 1, registers with NRF and sends Nnrf_NFManagement_NFRegister request to NRF. In the request the Central NWDAF 1 provides Supported Analytics ID(s), Service Area or TAI(s) = PLMN and "aggregator functionality indication" (i.e., indication that it additionally provides aggregation functionality).
5. NRF stores the NFProfile for the Central NWDAF 1, along with "aggregator functionality indication", indicating NWDAF C can be used as "aggregation" function or Central NWDAF 1. NFProfile of Central NWDAF 1 also indicates corresponding "Set_ID" in case this Central NWDAF belongs to a Set.
6. NRF confirms successful registration to Central NWDAF 1.
7. NWDAF 2 is one of the distributed NWDAFs, and it registers its NFProfile with NRF. This is similar to the existing procedure, e.g., as defined in 3GPP TS 23.502, but with an additional indication, if supported by this NWDAF Instance, indicating "analytics metadata provisioning capability". This indicator is used by NWDAF Service Consumer, for example a Central NWDAF, to request Output Analytics, and if needed, aggregation analytics metadata by including indicator "aggregation analytics metadata request" in the request message.
8. NRF on receipt of the registration request in the above step 7, stores NFProfile of this NWDAF instance. If indicated by this NWDAF instance, NRF also stores "analytics metadata provisioning capability" in the NFProfile for this NWDAF instance.
9. NRF replies to NWDAF 2 with Nnrf_NFManagement_NFRegister Response message.

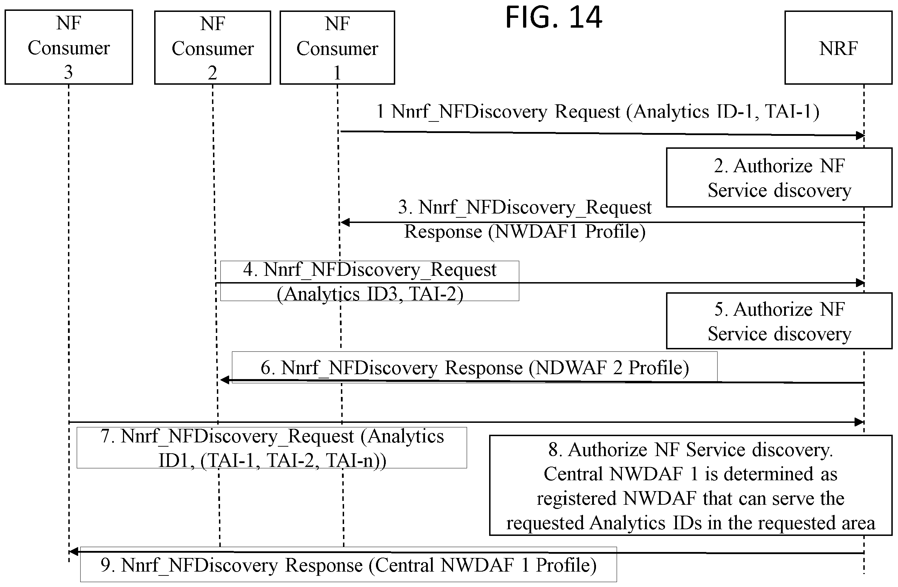

In some embodiments, a procedure for an NF Consumer to discover a NWDAF with the NRF may following the NWDAF Discovery Procedure outlined below, and as illustrated in FIG. 14.
1-3. NF Consumer 1 is interested in Analytics ID 1 over Area of Interest TAI-1, and so it sends a Nnrf_NFDiscovery_Request to NRF. After having authorized the request, NRF determines that NWDAF 1 can provide Analytics for the requested Analytics ID 1 and serving area TAI-1. NRF then returns the NFProfile of distributed NWDAF 1 in the corresponding response. This is following existing procedure as defined in 3GPP TS 23.502.
4-6. NF Consumer 2 is interested in Analytics ID 3 over Area of Interest TAI-2, and so it sends a Nnrf_NFDiscovery_Request to NRF. After having authorized the request, NRF determines that NWDAF 2 can provide Analytics for the requested Analytics ID 3 and serving area TAI-2. NRF then returns the NFProfile of distributed NWDAF2 in the corresponding response. This is also following existing procedure as defined in 3GPP TS 23.502.
7-9. NF Consumer 3 is interested in Analytics ID 1 and areas of interest as TAI-1, TAI-2, TAI-n. On receiving this request, NRF finds out there is no single distributed NWDAF serving the requested areas of interest, and so it responds back with Central NWDAF 1 profile, which is configured as "aggregator functionality" for the requested Analytic ID 1.

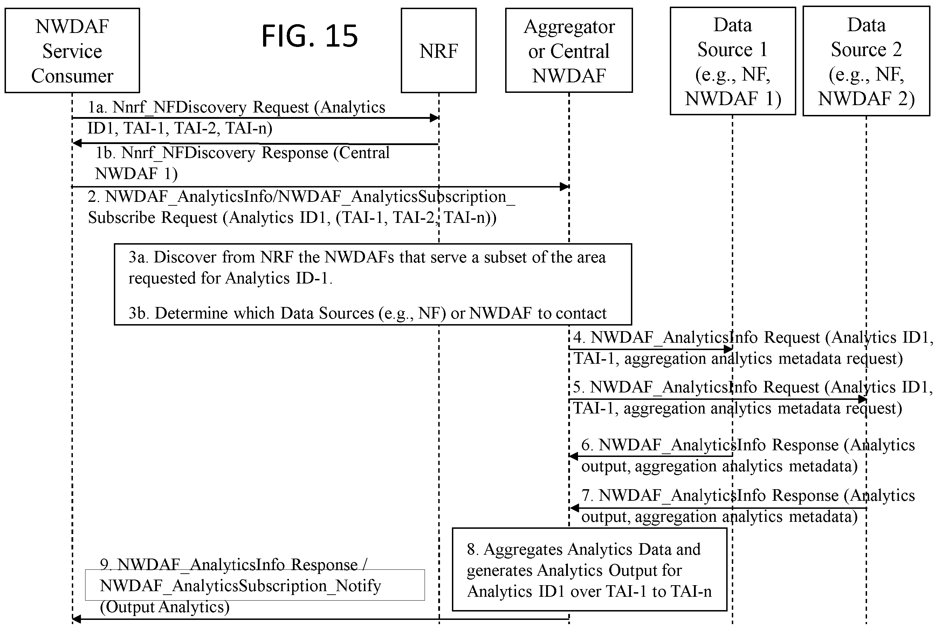

In some embodiments, the NF Consumer/Analytics Consumer may request and/or subscribe to get the Analytics ID of its interest according to the Procedure for Analytics Exposure described below, and as illustrated in FIG. 15.
1. This is the discovery procedure. In this example, NRF will return the Central NWDAF 1 profile as there is no single distributed NWDAF that can cover the request.
2. NWDAF Service Consumer sends Analytics information request to Central NWDAF 1. In the request, NF consumer provides the requested Analytics ID(s), e.g. UE mobility analytics with Analytics ID 1, along with the requested area of interest e.g. TAI-1, TAI-2, TAI-n.
3. On receiving the request in step 2, Central NWDAF 1, based on previous queries or configuration, knows which other NWDAF Instances to request related Output Analytics. Alternatively, Central NWDAF 1 discovers from NRF a list of distributed NWDAF(s) that can provide output analytics needed to generate the requested Analytics ID for the requested area TAI-1, TAI-2, TAI-n. In some embodiments, in the discovery request sent to the NRF, the Central NWDAF may indicate "analytics metadata provisioning capability," thus requesting that the NRF reply back with, if available, those NWDAF instance(s) which also supports "analytics metadata provisioning capability" functionalities as indicated during particular NWDAF Instance registration procedure.
4-5. Central NWDAF sends analytics information request to each of the Data Sources discovered/determined in step 3, i.e., to NWDAF 1 and NWDAF 2. This request indicates "aggregation-metadata request" to the data source(s) (i.e. to NWDAF 1 and NWDAF 2), indicating that the output provided by them needs to be aggregated by the Central NWDAF and so the aggregation analytics metadata is also requested, along with usual analytics output data.
6-7. NWDAFs reply with the requested Output Analytics along with aggregation analytics metadata information required for the aggregation.
8. Central NWDAF aggregates the received data, i.e., generates a single Output Analytics based on the multiple Analytics information received from NWDAF 1 and NWDAF 2. In this example, the central NWDAF also takes its own analytics for TAI-n into account for the aggregation.
9. Central NWDAF replies to NWDAF Service Consumer the Output Analytics for the requested analytics ID.

In some embodiments, the enhancements described herein may provide for improvements in services, entities, and interfaces of a system, such as a 5G system. For instance, in some embodiments, the NWDAF described may be enhanced by the introduction of an NWDAF providing the capability to aggregate Output Analytics (referred to as Central NWDAF). Likewise, in some embodiments, the distributed NWDAFs described herein may be configured to provide analytics metadata related to the Output Analytics, which may be supported by only subset of the distributed NWDAFs.

In some embodiments, the NRF may extend the NFProfile for the Central NWDAF to indicate "aggregator functionality", which may improve Analytics coverage and ensure that the proper Analytics are returned to the NF Consumer from a Data Source such as an NF, a distributed NWDAF, or a Central NWDAF. In some embodiments, the NFProfile for NWDAFs is extended to indicate "analytics metadata provisioning capability" for those NWDAFs which support such additional functionality.

As described above, a method, apparatus 200 and computer program product are disclosed to enhance methods for data analytics in multiple NWDAF deployments.

As described above, the referenced flowcharts of methods that can be carried out by an apparatus according to related computer program products comprising computer program code. It will be understood that each block of the flowcharts, and combinations of blocks in the flowcharts, can be implemented by various means, such as hardware, firmware, processor, circuitry, and/or other devices associated with execution of software including one or more computer program instructions. For example, one or more of the procedures described above can be embodied by computer program instructions. In this regard, the computer program instructions which embody the procedures described above can be stored by a memory device, e.g., 204, of an apparatus, e.g., 200, employing an embodiment of the present invention and executed by processor, e.g., 202, of the apparatus. As will be appreciated, any such computer program instructions can be loaded onto a computer or other programmable apparatus (e.g., hardware) to produce a machine, such that the resulting computer or other programmable apparatus implements the functions specified in the flowchart blocks. These computer program instructions can also be stored in a computer-readable memory that can direct a computer or other programmable apparatus to function in a particular manner, such that the instructions stored in the computer-readable memory produce an article of manufacture, the execution of which implements the function specified in the flowchart blocks. The computer program instructions can also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

A computer program product is therefore defined in those instances in which the computer program instructions, such as computer-readable program code portions, are stored by at least one non-transitory computer-readable storage medium with the computer program instructions, such as the computer-readable program code portions, being configured, upon execution, to perform the functions described above. In other embodiments, the computer program instructions, such as the computer-readable program code portions, need not be stored or otherwise embodied by a non-transitory computer-readable storage medium, but can, instead, be embodied by a transitory medium with the computer program instructions, such as the computer-readable program code portions, still being configured, upon execution, to perform the functions described above.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

In some embodiments, certain ones of the operations, methods, steps, processes, or the like, above can be modified or further amplified. Furthermore, in some embodiments, additional optional operations, methods, steps, processes, or the like, can be included. Modifications, additions, subtractions, inversions, correlations, proportional relationships, disproportional relationships, attenuation and/or amplifications to the operations above can be performed in any order and in any combination. It will also be appreciated that in instances where particular operations, methods, steps, processes, or the like, required particular hardware such hardware should be considered as part of apparatus 200 for any such embodiment. For example, as described above where a GPS is used to determine the location of apparatus 200 such appropriate GPS modules and hardware should be considered integral to apparatus 200.
In the following, technical teaching as presented above is summarized for ease of understanding. In this regard, the thus recited embodiments refer to embodiments of the present disclosure, without specifying and/or limiting the present invention as claimed.

A method, apparatus, and computer program product are provided for enhanced data analytics in multiple network data analytics function (NWDAF) deployments in a communications system. A method can include receiving, from a network function consumer, an analytics request, said analytics request comprising analytics identifications and areas of interest; causing determination of data sources in the communications system that are configured to serve a subset of the areas of interest for the analytics identifications. An analytics information request that includes an aggregation-support indication can be sent to data sources to indicate that the data source should return analytics to the central NWDAF and include metadata to support aggregation of analytics by the central NWDAF. A network repository function (NRF) can be caused to determine which of the multiple NWDAFs in the communications system is the central NWDAF based upon whether NWDAFs have aggregation functionality.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions can be provided by alternative embodiments without departing from the scope of the appended claims. In this regard, for example, different combinations of elements and/or functions than those explicitly described above are also contemplated as can be set forth in some of the appended claims. Although specific terms are employed herein, they are used in a generic and descriptive sense only and not for purposes of limitation.

## Claims

1. A method comprising:
receiving (11), from a network function consumer in a communications system, an analytics request, said analytics request comprising one or more analytics identifications and one or more areas of interest;
discovering, for at least one of the analytics identifications, by causing determination (12) at a network repository function, NRF, of the communications system, one or more data sources in the communications system that are configured to serve a particular subset of the one or more areas of interest;
transmitting (13), for said at least one of the analytics identifications, to each of the one or more data sources, a request for analytics information associated with the particular subset of the one or more areas of interest, said request for analytics information comprising an analytics metadata request for requesting provision of analytics metadata related to the requested analytics information;
receiving, from each of the one or more data sources, an analytics output comprising the requested analytics information and the analytics metadata related to the requested analytics information; and
generating an analytics output for the one or more analytics identifications and the one or more areas of interest based on each analytics output from the one or more data sources and each analytics metadata from the one or more data sources.

2. The method of claim 1, said discovering further comprising:
causing the NRF to determine said one or more data sources in the communications system that are configured to serve the particular subset of the one or more areas of interest.

3. The method of claim 2, said causing the NRF to determine said one or more data sources in the communication system further comprising:
transmitting a discovery request to the NRF, the discovery request being operable to cause the NRF to identify one or more distributed network data analytics functions in the communications system that correspond to said one or more areas of interest.

4. The method of any one of claims 1 to 3, wherein the one or more data sources comprise at least one network function.

5. The method of any one of claims 1 to 4, wherein the one or more data sources comprise at least one network data analytics function.

6. A method comprising:
in response to receiving, at a data source within a communications system, a request for analytics information associated with one or more areas of interest and one or more analytics identifications from a network data analytics function within the communications system,
determining (21, 23) if the request for analytics information comprises an analytics metadata request for requesting provision of analytics metadata related to the requested analytics information;
in an instance in which the request for analytics information comprises the analytics metadata request, generating (22, 24) an analytics output comprising the requested analytics information and the analytics metadata related to the requested analytics information; and
transmitting (25), to the network data analytics function, the analytics output comprising the requested analytics information and the analytics metadata related to the requested analytics information.

7. The method of claim 6, wherein the analytics metadata comprises one or more from among: a number of samples, a time period for collected samples, a pointer to a data model, a pointer to a data lake, or a pointer to a storage function.

8. An apparatus comprising:
means (202, 204, 206) for receiving, from a network function consumer in a communications system, an analytics request, said analytics request comprising one or more analytics identifications and one or more areas of interest;
means (202, 204, 206) for discovering, for at least one of the analytics identifications, by causing determination at a network repository function, NRF, of the communication system, one or more data sources in the communications system that are configured to serve a particular subset of the one or more areas of interest;
means for transmitting, for said at least one of the analytics identifications, to each of the one or more data sources, a request for analytics information associated with the particular subset of the one or more areas of interest, said request for analytics information comprising an analytics metadata request for requesting provision of analytics metadata related to the requested analytics information;
means (202, 204, 206) for receiving, from each of the one or more data sources, an analytics output comprising the requested analytics information and the analytics metadata related to the requested analytics information; and
means (202, 204, 206) for generating an analytics output for the one or more analytics identifications and the one or more areas of interest based on each analytics output from the one or more data sources and each analytics metadata from the one or more data sources.

9. The apparatus of claim 8, further comprising:
means (202, 204, 206) for causing the NRF to determine said one or more data sources in the communications system that are configured to serve the particular subset of the one or more areas of interest.

10. The apparatus of claim 9, said means for causing the NRF to determine said one or more data sources in the communication system comprising:
means (202, 204, 206) for transmitting a discovery request to the NRF, the discovery request being operable to cause the NRF to identify one or more distributed network data analytics functions in the communications system that correspond to said one or more areas of interest.

11. The apparatus of any one of claims 8 to 10, wherein the one or more data sources comprise at least one network function.

12. The apparatus of any one of claims 8 to 11, wherein the one or more data sources comprise at least one network data analytics function.

13. An apparatus comprising:
means (202, 204, 206) for, in response to receiving, at a data source within a communications system, a request for analytics information associated with one or more areas of interest and one or more analytics identifications from a network data analytics function within the communications system, determining if the request for analytics information comprises an analytics metadata request for requesting provision of analytics metadata related to the requested analytics information;
means (202, 204, 206) for, in an instance in which the request for analytics information comprises the analytics metadata request, generating an analytics output comprising the requested analytics information and the analytics metadata related to the requested analytics information; and
means (202, 204, 206) for transmitting, to the network data analytics function, the analytics output comprising the requested analytics information and the analytics metadata related to the requested analytics information.

14. The apparatus of claim 13, wherein the analytics metadata comprises one or more from among: a number of samples, a time period for collected samples, a pointer to a data model, a pointer to a data lake, or a pointer to a storage function.

15. A computer program product comprising a non-transitory computer readable storage medium having program code portions stored thereon, the program code portions configured, upon execution by an apparatus, to cause the apparatus to carry out the method according to any one or claims 1 to 7.

## Patentansprüche

1. Verfahren, das Folgendes umfasst:
Empfangen (11) einer Analyseanforderung von einem Netzwerkfunktionsverbraucher in einem Kommunikationssystem, wobei die Analyseanforderung eine oder mehrere Analyseidentifikationen und eine oder mehrere Bereiche von Interesse umfasst;
Entdecken von einer oder mehreren Datenquellen im Kommunikationssystem, die dazu ausgelegt sind, einem speziellen Untersatz des einen oder der mehreren Bereiche von Interesse zu dienen, für mindestens eine der Analyseidentifikationen durch Veranlassen des Bestimmens (12) an einer Netzwerkrepositoriumsfunktion, NRF, des Kommunikationssystems;
Übertragen (13) einer Anforderung von Analyseinformationen, die mit dem speziellen Untersatz des einen oder der mehreren Bereiche von Interesse verknüpft sind, für die mindestens eine der Analyseidentifikationen zu jeder der einen oder der mehreren Datenquellen, wobei die Anforderung von Analyseinformationen eine Analysemetadatenanforderung zum Anfordern einer Bereitstellung von Analysemetadaten für die angeforderten Analyseinformationen umfasst;
Empfangen einer Analyseausgabe, die die angeforderten Analyseinformationen und die Analysemetadaten umfasst, die sich auf die angeforderten Analyseinformationen beziehen, von jeder der einen oder der mehreren Datenquellen; und
Erzeugen einer Analyseausgabe für die eine oder die mehreren Analyseidentifikationen und den einen oder die mehreren Bereiche von Interesse auf Basis jeder Analyseausgabe von der einen oder den mehreren Datenquellen und allen Analysemetadaten von der einen oder den mehreren Datenquellen.

2. Verfahren nach Anspruch 1, wobei das Entdecken ferner Folgendes umfasst:
Veranlassen der NRF, die eine oder die mehreren Datenquellen im Kommunikationssystem zu bestimmen, die dazu ausgelegt sind, dem speziellen Untersatz des einen oder der mehreren Bereiche von Interesse zu dienen.

3. Verfahren nach Anspruch 2, wobei das Veranlassen der NRF, die eine oder die mehreren Datenquellen im Kommunikationssystem zu bestimmen, ferner Folgendes umfasst:
Übertragen einer Entdeckungsanforderung zur NRF, wobei die Entdeckungsanforderung betreibbar ist, die NRF zu veranlassen, eine oder mehrere verteilte Netzwerkdatenanalysefunktionen im Kommunikationssystem zu identifizieren, die dem einen oder den mehreren Bereichen von Interesse entsprechen.

4. Verfahren nach einem der Ansprüche 1 bis 3, wobei die eine oder die mehreren Datenquellen mindestens eine Netzwerkfunktion umfassen.

5. Verfahren nach einem der Ansprüche 1 bis 4, wobei die eine oder die mehreren Datenquellen mindestens eine Netzwerkdatenanalysefunktion umfassen.

6. Verfahren, das Folgendes umfasst:
in Reaktion auf das Empfangen einer Anforderung von Analyseinformationen, die mit dem einen oder den mehreren Bereichen von Interesse und einer oder mehreren Analyseidentifikationen verknüpft sind, an einer Datenquelle in einem Kommunikationssystem von einer Netzwerkdatenanalysefunktion im Kommunikationssystem,
Bestimmen (21, 23), ob die Anforderung von Analyseinformationen eine Analysemetadatenanforderung zum Anfordern einer Bereitstellung von Analysemetadaten, die sich auf die angeforderten Analyseinformationen beziehen, umfasst;
in einem Fall, in dem die Anforderung von Analyseinformationen die Analysemetadatenanforderung umfasst, Erzeugen (22, 24) einer Analyseausgabe, die die angeforderten Analyseinformationen und die Analysemetadaten umfasst, die sich auf die angeforderten Analyseinformationen beziehen; und
Übertragen (25) der Analyseausgabe, die die angeforderten Analyseinformationen und die Analysemetadaten umfasst, die sich auf die angeforderten Analyseinformationen beziehen, zur Netzwerkdatenanalysefunktion.

7. Verfahren nach Anspruch 6, wobei die Analysemetadaten eines oder mehreres von Folgendem umfassen: einer Anzahl von Abtastwerten, einer Zeitperiode für gesammelte Abtastwerte, einem Zeiger zu einem Datenmodell, einem Zeiger zu einem Datensee oder einem Zeiger zu einer Speicherfunktion.

8. Vorrichtung, die Folgendes umfasst:
Mittel (202, 204, 206) zum Empfangen einer Analyseanforderung von einem Netzwerkfunktionsverbraucher in einem Kommunikationssystem, wobei die Analyseanforderung eine oder mehrere Analyseidentifikationen und eine oder mehrere Bereiche von Interesse umfasst;
Mittel (202, 204, 206) zum Entdecken von einer oder mehreren Datenquellen im Kommunikationssystem, die dazu ausgelegt sind, einem speziellen Untersatz des einen oder der mehreren Bereiche von Interesse zu dienen, für mindestens eine der Analyseidentifikationen durch Veranlassen des Bestimmens an einer Netzwerkrepositoriumsfunktion, NRF, des Kommunikationssystems;
Mittel zum Übertragen einer Anforderung von Analyseinformationen, die mit dem speziellen Untersatz des einen oder der mehreren Bereiche von Interesse verknüpft sind, für die mindestens eine der Analyseidentifikationen zu jeder der einen oder der mehreren Datenquellen, wobei die Anforderung von Analyseinformationen eine Analysemetadatenanforderung zum Anfordern einer Bereitstellung von Analysemetadaten für die angeforderten Analyseinformationen umfasst;
Mittel (202, 204, 206) zum Empfangen einer Analyseausgabe, die die angeforderten Analyseinformationen und die Analysemetadaten umfasst, die sich auf die angeforderten Analyseinformationen beziehen, von jeder der einen oder der mehreren Datenquellen; und
Mittel (202, 204, 206) zum Erzeugen einer Analyseausgabe für die eine oder die mehreren Analyseidentifikationen und den einen oder die mehreren Bereiche von Interesse auf Basis jeder Analyseausgabe von der einen oder den mehreren Datenquellen und allen Analysemetadaten von der einen oder den mehreren Datenquellen.

9. Vorrichtung nach Anspruch 8, die ferner Folgendes umfasst:
Mittel (202, 204, 206) zum Veranlassen der NRF, die eine oder die mehreren Datenquellen im Kommunikationssystem zu bestimmen, die dazu ausgelegt sind, dem speziellen Untersatz des einen oder der mehreren Bereiche von Interesse zu dienen.

10. Vorrichtung nach Anspruch 9, wobei die Mittel zum Veranlassen der NRF, die eine oder die mehreren Datenquellen im Kommunikationssystem zu bestimmen, Folgendes umfassen:
Mittel (202, 204, 206) zum Übertragen einer Entdeckungsanforderung zur NRF, wobei die Entdeckungsanforderung betreibbar ist, die NRF zu veranlassen, eine oder mehrere verteilte Netzwerkdatenanalysefunktionen im Kommunikationssystem zu identifizieren, die dem einen oder den mehreren Bereichen von Interesse entsprechen.

11. Vorrichtung nach einem der Ansprüche 8 bis 10, wobei die eine oder die mehreren Datenquellen mindestens eine Netzwerkfunktion umfassen.

12. Vorrichtung nach einem der Ansprüche 8 bis 11, wobei die eine oder die mehreren Datenquellen mindestens eine Netzwerkdatenanalysefunktion umfassen.

13. Vorrichtung, die Folgendes umfasst:
in Reaktion auf das Empfangen einer Anforderung von Analyseinformationen, die mit dem einen oder den mehreren Bereichen von Interesse und einer oder mehreren Analyseidentifikationen verknüpft sind, an einer Datenquelle in einem Kommunikationssystem von einer Netzwerkdatenanalysefunktion im Kommunikationssystem, Mittel (202, 204, 206) zum Bestimmen, ob die Anforderung von Analyseinformationen eine Analysemetadatenanforderung zum Anfordern einer Bereitstellung von Analysemetadaten umfasst, die sich auf die angeforderten Analyseinformationen beziehen;
in einem Fall, in dem die Anforderung von Analyseinformationen die Analysemetadatenanforderung umfasst, Mittel (202, 204, 206) zum Erzeugen einer Analyseausgabe, die die angeforderten Analyseinformationen und die Analysemetadaten umfasst, die sich auf die angeforderten Analyseinformationen beziehen; und
Mittel (202, 204, 206) zum Übertragen der Analyseausgabe, die die angeforderten Analyseinformationen und die Analysemetadaten umfasst, die sich auf die angeforderten Analyseinformationen beziehen, zur Netzwerkdatenanalysefunktion.

14. Vorrichtung nach Anspruch 13, wobei die Analysemetadaten eines oder mehreres von Folgendem umfassen: einer Anzahl von Abtastwerten, einer Zeitperiode für gesammelte Abtastwerte, einem Zeiger zu einem Datenmodell, einem Zeiger zu einem Datensee oder einem Zeiger zu einer Speicherfunktion.

15. Computerprogrammprodukt, das ein nichttransitorisches computerlesbares Speichermedium aufweist, auf dem Programmcodeabschnitte gespeichert sind, wobei die Programmcodeabschnitte dazu ausgelegt sind, nach Ausführung durch eine Vorrichtung die Vorrichtung zu veranlassen, das Verfahren gemäß einem der Ansprüche 1 bis 7 umzusetzen.

## Revendications

1. Procédé comprenant les étapes suivantes :
recevoir (11), d'un consommateur de fonction de réseau dans un système de communication, une demande d'analyse, ladite demande d'analyse comprenant une ou plusieurs identifications d'analyse et une ou plusieurs zones d'intérêt ;
découvrir, pour au moins une des identifications d'analyse, en provoquant une détermination (12) au niveau d'une fonction de référentiel de réseau, NRF, du système de communication, une ou plusieurs sources de données dans le système de communication qui sont configurées pour servir un sous-ensemble particulier des une ou plusieurs zones d'intérêt ;
transmettre (13), pour ladite au moins une des identifications d'analyse, à chacune des une ou plusieurs sources de données, une demande d'informations d'analyse associées au sous-ensemble particulier des une ou plusieurs zones d'intérêt, ladite demande d'informations d'analyse comprenant une demande de métadonnées d'analyse concernant la fourniture de métadonnées d'analyse liées aux informations d'analyse demandées ;
recevoir, de chacune des une ou plusieurs sources de données, une sortie d'analyse comprenant les informations d'analyse demandées et les métadonnées d'analyse liées aux informations d'analyse demandées ; et
générer une sortie d'analyse pour les une ou plusieurs identifications d'analyse et les une ou plusieurs zones d'intérêt sur la base de chaque sortie d'analyse des une ou plusieurs sources de données et de chaque métadonnées d'analyse des une ou plusieurs sources de données.

2. Procédé selon la revendication 1, où ladite découverte comprend en outre ce qui suit :
amener la NRF à déterminer lesdites une ou plusieurs sources de données dans le système de communication qui sont configurées pour servir le sous-ensemble particulier des une ou plusieurs zones d'intérêt.

3. Procédé selon la revendication 2, où le fait d'amener la NRF à déterminer lesdites une ou plusieurs sources de données dans le système de communication comprend en outre ce qui suit :
transmettre une demande de découverte à la NRF, la demande de découverte pouvant amener la NRF à identifier une ou plusieurs fonctions d'analyse de données de réseau distribuées dans le système de communication qui correspondent auxdites une ou plusieurs zones d'intérêt.

4. Procédé selon l'une des revendications 1 à 3, dans lequel les une ou plusieurs sources de données comprennent au moins une fonction de réseau.

5. Procédé selon l'une des revendications 1 à 4, dans lequel les une ou plusieurs sources de données comprennent au moins une fonction d'analyse de données de réseau.

6. Procédé comprenant les étapes suivantes :
en réponse à la réception, au niveau d'une source de données au sein d'un système de communication, d'une demande d'informations d'analyse associées à une ou plusieurs zones d'intérêt et une ou plusieurs identifications d'analyse d'une fonction d'analyse de données de réseau au sein du système de communication,
déterminer (21, 23) si la demande d'informations d'analyse comprend une demande de métadonnées d'analyse concernant la fourniture de métadonnées d'analyse liées aux informations d'analyse demandées ;
dans un cas où la demande d'informations d'analyse comprend la demande de métadonnées d'analyse, générer (22, 24) une sortie d'analyse comprenant les informations d'analyse demandées et les métadonnées d'analyse liées aux informations d'analyse demandées ; et
transmettre (25), à la fonction d'analyse de données de réseau, la sortie d'analyse comprenant les informations d'analyse demandées et les métadonnées d'analyse liées aux informations d'analyse demandées.

7. Procédé selon la revendication 6, dans lequel les métadonnées d'analyse comprennent un ou plusieurs parmi : un certain nombre d'échantillons, une période de temps de collecte d'échantillons, un pointeur vers un modèle de données, un pointeur vers un lac de données, ou un pointeur vers une fonction de stockage.

8. Appareil comprenant :
des moyens (202, 204, 206) pour recevoir, d'un consommateur de fonction de réseau dans un système de communication, une demande d'analyse, ladite demande d'analyse comprenant une ou plusieurs identifications d'analyse et une ou plusieurs zones d'intérêt ;
des moyens (202, 204, 206) pour découvrir, pour au moins une des identifications d'analyse, en provoquant une détermination au niveau d'une fonction de référentiel de réseau, NRF, du système de communication, une ou plusieurs sources de données dans le système de communication qui sont configurées pour servir un sous-ensemble particulier des une ou plusieurs zones d'intérêt ;
des moyens pour transmettre, pour ladite au moins une des identifications d'analyse, à chacune des une ou plusieurs sources de données, une demande d'informations d'analyse associées au sous-ensemble particulier des une ou plusieurs zones d'intérêt, ladite demande d'informations d'analyse comprenant une demande de métadonnées d'analyse concernant la fourniture de métadonnées d'analyse liées aux informations d'analyse demandées ;
des moyens (202, 204, 206) pour recevoir, de chacune des une ou plusieurs sources de données, une sortie d'analyse comprenant les informations d'analyse demandées et les métadonnées d'analyse liées aux informations d'analyse demandées ; et
des moyens (202, 204, 206) pour générer une sortie d'analyse pour les une ou plusieurs identifications d'analyse et les une ou plusieurs zones d'intérêt sur la base de chaque sortie d'analyse des une ou plusieurs sources de données et de chaque métadonnées d'analyse des une ou plusieurs sources de données.

9. Appareil selon la revendication 8, comprenant en outre :
des moyens (202, 204, 206) pour amener la NRF à déterminer lesdites une ou plusieurs sources de données dans le système de communication qui sont configurées pour servir le sous-ensemble particulier des une ou plusieurs zones d'intérêt.

10. Appareil selon la revendication 9, où lesdits moyens pour amener la NRF à déterminer lesdites une ou plusieurs sources de données dans le système de communication comprennent :
des moyens (202, 204, 206) pour transmettre une demande de découverte à la NRF, la demande de découverte pouvant amener la NRF à identifier une ou plusieurs fonctions d'analyse de données de réseau distribuées dans le système de communication qui correspondent auxdites une ou plusieurs zones d'intérêt.

11. Appareil selon l'une des revendications 8 à 10, dans lequel les une ou plusieurs sources de données comprennent au moins une fonction de réseau.

12. Appareil selon l'une des revendications 8 à 11, dans lequel les une ou plusieurs sources de données comprennent au moins une fonction d'analyse de données de réseau.

13. Appareil comprenant :
des moyens (202, 204, 206) pour, en réponse à la réception, au niveau d'une source de données au sein d'un système de communication, d'une demande d'informations d'analyse associées à une ou plusieurs zones d'intérêt et une ou plusieurs identifications d'analyse d'une fonction d'analyse de données de réseau au sein du système de communication, déterminer si la demande d'informations d'analyse comprend une demande de métadonnées d'analyse concernant la fourniture de métadonnées d'analyse liées aux informations d'analyse demandées ;
des moyens (202, 204, 206) pour, dans un cas où la demande d'informations d'analyse comprend la demande de métadonnées d'analyse, générer une sortie d'analyse comprenant les informations d'analyse demandées et les métadonnées d'analyse liées aux informations d'analyse demandées ; et
des moyens (202, 204, 206) pour transmettre, à la fonction d'analyse de données de réseau, la sortie d'analyse comprenant les informations d'analyse demandées et les métadonnées d'analyse liées aux informations d'analyse demandées.

14. Appareil selon la revendication 13, dans lequel les métadonnées d'analyse comprennent un ou plusieurs parmi : un certain nombre d'échantillons, une période de temps de collecte d'échantillons, un pointeur vers un modèle de données, un pointeur vers un lac de données, ou un pointeur vers une fonction de stockage.

15. Produit de programme informatique comprenant un support de stockage non transitoire lisible par ordinateur sur lequel sont stockées des portions de code de programme, les portions de code de programme étant configurées pour, lorsqu'elles sont exécutées par un appareil, amener l'appareil à mettre en œuvre le procédé selon l'une des revendications 1 à 7.
